# EUROPÄISCHE PATENTSCHRIFT

(11) **EP 3 469 705 B1**
(45) Veröffentlichungstag und Bekanntmachung des Hinweises auf die Patenterteilung: **18.11.2020**
(21) Anmeldenummer: 17718865.3
(22) Anmeldetag: 13.04.2017
(51) Int. Cl.: H02P 29/02

(54) **VERFAHREN UND SCHUTZVORRICHTUNG ZUR DREHMOMENTBEGRENZUNG FÜR EINE ELEKTRISCHE MASCHINE**
METHOD AND PROTECTIVE DEVICE FOR LIMITING THE TORQUE FOR AN ELECTRICAL MACHINE
PROCÉDÉ ET DISPOSITIF DE PROTECTION POUR LIMITER LE COUPLE D'UNE MACHINE ÉLECTRIQUE

(30) Priorität: 09.06.2016 DE 102016210238
(43) Veröffentlichungstag der Anmeldung: 17.04.2019
(73) Patentinhaber: Volkswagen Aktiengesellschaft, 38440 Wolfsburg (DE)
(72) Erfinder: WASSMUTH, Jürgen, 35119 Rosenthal (DE); MANKEL, Michael, 35216 Biedenkopf (DE)
(86) Internationale Anmeldenummer: PCT/EP2017/058913
(87) Internationale Veröffentlichungsnummer: WO 2017/211487

(56) Entgegenhaltungen:
- DE-A1- 10 261 450
- DE-A1-102011 081 173
- DE-A1-102012 216 008
- DE-A1-102013 213 044
- DE-A1-102013 216 311

## Beschreibung

Die Erfindung betrifft ein Verfahren zum Begrenzen eines Drehmoments einer durch einen wenigstens einphasigen Umrichter gespeisten elektrischen Maschine, die bei einer fehlerhaften Ansteuerung des Umrichters in einen aktiven Kurzschlussbetrieb und bei Unterschreiten einer Drehzahlschwelle in einen Freilaufbetrieb überführt wird. Die Erfindung betrifft weiterhin eine Schutzvorrichtung zum Begrenzen eines Drehmoments einer elektrischen Maschine, die dazu vorgesehen ist, durch einen wenigstens einphasigen Umrichter gespeist, bei einer fehlerhaften Ansteuerung des Umrichters in einen aktiven Kurzschlussbetrieb und bei Unterschreiten einer Drehzahlschwelle in einen Freilaufbetrieb überführt zu werden. Die Erfindung betrifft außerdem einen elektrischen Antrieb sowie ein Fahrzeug, insbesondere ein Straßenfahrzeug.

### Stand der Technik

Aus der Druckschrift DE 10 2013 216 311 A1 ist eine Schutzvorrichtung zur Drehmomentbegrenzung für eine elektrische Maschine bekannt die dazu vorbereitet ist, an einem ersten Ausgang für eine endgültige Erregerstrom-Sollwertvorgabe einen Wert auszugeben, der einen Erregerfluss der elektrischen Maschine teilweise oder vollständig kompensiert. Unter einem ersten Aspekt weist die Schutzvorrichtung einen zweiten Ausgang zum Umschalten einer Umrichtersteuerung in einen Leerlaufbetrieb auf. Unter einem zweiten Aspekt ist die Schutzvorrichtung dazu vorbereitet, nachdem ein Fehler erkannt wurde, einen Befehl an eine Umrichterschaltung, an der die elektrische Maschine betrieben wird, zum Übergang in einen aktiven Kurzschlussbetrieb zumindest dann auszugeben, wenn sich die elektrische Maschine in einem oberen Bereich ihres Drehzahlbereichs befindet. Beschrieben werden auch eine Umrichterschaltung mit einem Leistungshalbleiterschalter-Modul zum Betreiben einer elektrischen Maschine, wobei die Umrichterschaltung eine Schutzvorrichtung der genannten Art aufweist, sowie ein entsprechendes Verfahren.

Aus der Druckschrift WO 2013 023 807 A2 ist eine Betriebszustandsschaltung zum Ansteuern eines Wechselrichters bekannt, welcher eine ein- oder mehrphasige elektrische Maschine über Phasenanschlüsse mit einer ein- bzw. mehrphasigen Versorgungsspannung versorgt. Dazu umfasst der Wechselrichter obere Halbbrückenzweige mit hochspannungsseitigen Schalteinrichtungen und untere Halbbrückenzweige mit niederspannungsseitigen Schalteinrichtungen. Die Betriebszustandsschaltung umfasst eine Auswerteeinrichtung, welche mit den Phasenanschlüssen des Wechselrichters verbunden und dazu ausgelegt ist, Ausgangsspannungen des Wechselrichters an den Phasenanschlüssen zu erfassen und auf der Basis der erfassten Ausgangsspannungen eine Drehzahl der Maschine zu ermitteln. Eine Ansteuereinrichtung ist mit der Auswerteeinrichtung gekoppelt und dazu ausgelegt, in Abhängigkeit von der ermittelten Drehzahl den Wechselrichter in einen Freilaufzustand oder einen aktiven Kurzschluss zu schalten. Dabei wird der Freilaufzustand dadurch hergestellt, dass alle Schalteinrichtungen des Wechselrichters sperrend geschaltet werden. Der aktive Kurzschluss wird durch Schließen entweder aller hochspannungsseitigen Schalteinrichtungen bei geöffneten niederspannungsseitigen Schalteinrichtungen oder aller niederspannungsseitigen Schalteinrichtungen bei geöffneten hochspannungsseitigen Schalteinrichtungen hergestellt.

Wird im Wechselrichter ein Fehler erkannt, so kann die Maschine in den aktiven Kurzschluss geschaltet werden. Dabei verhält sich der Wechselrichter elektrisch neutral bezüglich einer Stromversorgung, insbesondere Gleichstromversorgung, z.B. Traktionsbatterie, aus der die Maschine im bestimmungsgemäßen Betrieb über den Wechselrichter gespeist wird. Im aktiven Kurzschluss wird keine Leistung an die Stromversorgung abgegeben oder aufgenommen. Es fließt aber ein Kurzschlussstrom durch den Wechselrichter, der aktiv von der rotierenden Maschine getrieben wird, durch die entsprechenden Leistungshalbleiter des Wechselrichters Die Maschine erzeugt dabei ein Kurzschlussmoment bzw. Bremsmoment an der Welle. Alternativ kann der Wechselrichter den Freilaufzustand einstellen, in dem die Maschine durch die Induktion eine drehzahlabhängige Polradspannung erzeugt.

Bei niedrigen Drehzahlen jedoch kann die elektrische Maschine im aktiven Kurzschluss ein hohes Bremsmoment erzeugen, so dass die Ansteuereinrichtung dazu ausgelegt ist, im Wechselrichter den Freilaufzustand einzustellen, wenn die in der Auswerteeinrichtung ermittelte momentane Drehzahl einen vorbestimmten Drehzahlschwellenwert unterschreitet. Hingegen kann bei hohen Drehzahlen die hohe induzierte Polradspannung die Spannung im Gleichspannungszwischenkreis übersteigen und hohe Ladeströme auf der Hochvoltseite des Wechselrichters erzeugen, was zu Schädigungen der Leistungselektronik und der Hochspannungsenergiequelle führen kann. Auch können in einem derartigen Betriebszustand unzulässig hohe Bremsmomente durch die Maschine erzeugt werden. In diesem Fall ist die Ansteuereinrichtung dazu ausgelegt, in dem Wechselrichter den aktiven Kurzschluss einzustellen, wenn die in der Auswerteeinrichtung ermittelte momentane Drehzahl einen vorbestimmten Drehzahlschwellenwert überschreitet.

Aus der Druckschrift WO 2014 037 143 A1 ist ebenfalls eine Betriebszustandsschaltung zum Ansteuern eines Wechselrichters mit jeweilige Schalteinrichtungen aufweisenden Halbbrücken bekannt, welcher eine n-phasige elektrische Maschine über den jeweiligen Halbbrücken zugeordnete Phasenanschlüsse mit einer n-phasigen Versorgungsspannung versorgt, wobei n ≥ 1. Die Betriebszustandsschaltung umfasst eine Auswerteeinrichtung, welche mit den Phasenanschlüssen des Wechselrichters einerseits und mit Eingangsanschlüssen des Wechselrichters andererseits verbunden ist, und welche dazu ausgelegt ist, eine Eingangsspannung des Wechselrichters sowie Phasenströme an den Phasenanschlüssen des Wechselrichters zu erfassen, und eine Ansteuereinrichtung, welche mit der Auswerteeinrichtung gekoppelt ist, und welche dazu ausgelegt ist, in Abhängigkeit von der erfassten Eingangsspannung den Wechselrichter von einem Kurzschlusszustand in einen Freilaufmodus zu schalten. Die Auswerteeinrichtung ist dazu ausgelegt, ein Freilauftriggersignal zu erzeugen und an die Ansteuereinrichtung auszugeben, wenn die erfasste Eingangsspannung geringer als ein einstellbarer Freilaufschwellenwert ist. Die Ansteuereinrichtung ist dazu ausgelegt, die jeweiligen Schalteinrichtungen der Halbbrücken nach Empfang des Freilauftriggersignals erst dann in einen geöffneten Zustand zu versetzen, wenn der jeweilige erfasste Phasenstrom an dem zugeordneten Phasenanschluss einen Nulldurchgang oder eine aus dem Wechselrichter herausweisende Stromrichtung aufweist.

In einer als Kurzschlusszustand zu niedrigem Potential bezeichneten Betriebsart können sämtliche mit einem niedrigen Potential verbundenen Schalter geschlossen und alle mit einem hohen Potential verbundenen Schalter geöffnet werden. Alternativ können auch alle mit dem hohen Potential verbundenen Schaltergeschlossen und alle mit dem niedrigen Potential verbundenen Schalter geöffnet werden, so dass ein Kurzschlusszustand zu hohem Potential entsteht. Bei dem als Freilaufmodus bezeichneten Abschaltverfahren werden sämtliche Schalter des Wechselrichters geöffnet.

Weiterhin kann die Auswerteeinrichtung dazu ausgelegt sein, Ausgangsspannungen des Wechselrichters an den Phasenanschlüssen zu erfassen und, insbesondere auf der Basis der erfassten Ausgangsspannungen, eine Drehzahl der elektrischen Maschine zu ermitteln. Der einstellbare Freilaufschwellenwert kann dabei einen ersten Spannungsschwellenwert aufweisen, wenn die ermittelte Drehzahl unter einem einstellbaren Drehzahlschwellenwert liegt, und einen zweiten Spannungsschwellenwert aufweisen, der kleiner als der erste Spannungsschwellenwert ist, wenn die ermittelte Drehzahl über dem einstellbaren Drehzahlschwellenwert liegt. Bei hohen Drehzahlen ist das durch die elektrische Maschine erzeugte Bremsmoment niedriger als bei niedrigen Drehzahlen, so dass oberhalb des einstellbaren Drehzahlschwellenwertes der Schutz des Gleichspannungszwischenkreises gegenüber Überspannungen priorisiert werden kann, indem der aktive Kurzschlusszustand schon bei geringeren Eingangsspannungen eingestellt wird.

Zusammengefasst muss ein an einem elektrischen Antrieb eines Fahrzeugs, insbesondere mit einer permanenterregten Synchron-Maschine, auftretender Fehler erkannt und das Fahrzeug in einen sicheren Zustand bezüglich des elektrischen Antriebs gebracht werden. Im Fehlerfall muss verhindert werden, dass durch einen fehlerhaften Antrieb ein unzulässig hohes Drehmoment auf die Räder des Fahrzeugs ausgeübt wird, welches die Fahrstabilität beeinflussen und die Insassen gefährden könnte. Daher wird beim Erkennen eines Fehlers im Antrieb dieser in den aktiven Kurzschlussbetrieb geschaltet. Durch den Kurzschluss wird die induzierte Spannung der Maschine kurzgeschlossen, so dass keine unzulässig hohen Spannungen entstehen können, die zur unkontrollierten Rückspeisung auf das Fahrzeugbatteriesystem und damit ebenfalls zu unzulässig hohen Drehmomenten am Fahrzeugantrieb führen können.

Die im aktiven Kurzschlussbetrieb auftretenden Kurzschlussströme bleiben innerhalb des Wechselrichters. Das durch den Kurzschlussstrom hervorgerufene ungewollte Drehmoment an der Maschine ist vergleichsweise gering und führt nicht zur Beeinträchtigung der Fahrstabilität des Fahrzeugs. Nachteilhaft wirkt sich der aktive Kurzschlussbetrieb dann aus, wenn ein Fahrzeug, mit aufgetretenem Fehler und dadurch permanent geschaltetem aktiven Kurzschlussbetrieb abgeschleppt oder als sogenanntes "Plug In Hybrid Electric Vehicle" - kurz: PHEV, eine Variante eines Hybridfahrzeugs - in einem Notlauf betrieben wird. In dem den aktiven Kurzschlussbetrieb auslösenden Fehlerfall kann - wie in der Druckschrift DE 10 2009 049 623 A1 beschrieben - z.B. ein Verlust eines Rotorlagegebersignals der Maschine aufgetreten oder die gesamte Ansteuerung des Wechselrichters und damit auch die Kühlung des Wechselrichters ausgefallen sein. Durch Bewegen eines solchen fehlerhaften Fahrzeugs kann durch den beim aktiven Kurzschlussbetrieb auftretenden Kurzschlussstrom der Wechselrichter thermisch beschädigt werden. Dieser Nachteil kann durch den Freilauf behoben werden.

DE 10 2011 081 173 A1 offenbart eine Betriebszustandsschaltung für Wechselrichter und sowie ein Verfahren zum Einstellen von Betriebszuständen eines Wechselrichters.

In DE 10 2013 216 311 A1 wird eine Schutzvorrichtung für eine elektrische Maschine offenbart, die an einem ersten Ausgang für eine endgültige Erregerstrom-Sollwertvorgabe einen Wert ausgeben kann.

DE 10 2012 216 008 A1 offenbart eine Betriebszustandsschaltung zum Ansteuern eines Wechselrichters mit jeweilige Schalteinrichtungen aufweisenden Halbbrücken,
welcher eine n-phasige elektrische Maschine über den jeweiligen Halbbrücken zugeordnete Phasenanschlüsse mit einer n-phasigen Versorgungsspannung versorgt.

DE 10 2013 213 044 A1 betrifft ein Verfahren zur Ansteuerung eines mehrphasigen Frequenzumrichters zur Ansteuerung einer Elektromaschine, wobei die Elektromaschine als Traktionsantrieb eines Fahrzeugs geeignet ist.

DE 10 261 450 A1 offenbart einen Elektromotor mit einer integrierten elektronischen Steuereinrichtung und einem mit dieser verbundenen Sensor, wobei der Sensor innerhalb eines Motorgehäuses angeordnet ist und allein oder zusätzlich als Sicherheitssensor dient.

### Darstellung der Erfindung: Aufgabe, Lösung, Vorteile

Die Erfindung hat die Aufgabe, ein Verfahren und eine Schutzvorrichtung zur Drehmomentbegrenzung für eine elektrische Maschine zu schaffen, die besonders einfach gestaltet bzw. aufgebaut sind. Bevorzugt ist es Aufgabe der Erfindung, ein derartiges Verfahren und eine derartige Schutzvorrichtung fehlersicher so zu gestalten, dass sie fehlersicher unabhängig von weiteren Steuereinrichtungen arbeiten, insbesondere unabhängig von einem Rotorlagegebersignal. Besonders bevorzugt hat die Erfindung die Aufgabe, ein besonders einfaches Verfahren und eine besonders einfache Schutzvorrichtung anzugeben, die ausgehend vom aktiven Kurzschlussbetrieb bei Unterschreiten einer Drehzahlschwelle in den Freilauf umschaltet.

Diese Aufgabe wird bei einem Verfahren der eingangs genannten Art dadurch gelöst, dass
- im aktiven Kurzschlussbetrieb wenigstens ein aktueller Istwert wenigstens eines Phasenstroms der Maschine detektiert,
- aus dem wenigstens einen detektierten aktuellen Istwert des wenigstens einen Phasenstroms ein eine aktuelle Drehzahlinformation beinhaltendes Drehzahlsignal abgeleitet,
- die aktuelle Drehzahlinformation des Drehzahlsignals mit der vorgebbaren Drehzahlschwelle verglichen,
- sobald die aktuelle Drehzahlinformation eine Drehzahl anzeigt, die die vorgebbare Drehzahlschwelle unterschreitet, ein Umschaltsignal zum Umschalten vom aktiven Kurzschlussbetrieb in den Freilauf erzeugt und
- mit diesem Umschaltsignal der Umrichter angesteuert
wird.

Die Erfindung schafft also ein Verfahren zum Begrenzen eines Drehmoments einerwenigstens einphasigen -elektrischen Maschine, die durch einen wenigstens einphasigen Umrichter gespeist wird und die bei einer fehlerhaften Ansteuerung des Umrichters in einen aktiven Kurzschlussbetrieb und bei Unterschreiten einer Drehzahlschwelle in einen Freilaufbetrieb überführt wird. Um dies möglichst einfach und sicher gegen - weitere - Fehler durchzuführen, wird erfindungsgemäß die Durchführung nachfolgend näher erläuterter Verfahrensschritte vorgeschlagen.

In der Ausgangssituation, von der die Erfindung ausgeht, ist zwar der Umrichter mit seinen Leistungsschaltern als solcher noch funktionsfähig, jedoch ist ein von der Drehung - Drehwinkel und/oder Drehzahl - der elektrischen Maschine bestimmtes Ansteuersignal, durch das die Leistungsschalter des Umrichters der Drehung der Maschine entsprechend zum Schalten der in die Maschine zu speisenden Phasenströme angesteuert werden, ausgefallen. Dies umfasst insbesondere Fehlerfälle, in denen ein Rotorlagegeber der elektrischen Maschine ausgefallen ist oder fehlerhaft arbeitet oder die Erzeugung eines Impulsmusters zur Ansteuerung der Maschine ausgefallen ist. Die elektrische Maschine lässt sich damit nicht mehr drehwinkel- und/oder drehzahlabhängig steuern, vom Rotorlagegeber liegt keine Drehzahlinformation mehr vor. Allerdings sind die einzelnen Leistungsschalter des Umrichters weiterhin noch schaltbar, so dass durch sie der aktive Kurzschlussbetrieb der elektrischen Maschine eingeleitet werden kann, d.h. der Umrichter schaltet die elektrische Maschine bei einem derartigen Fehler in den aktiven Kurzschlussbetrieb. Dadurch wird die elektrische Maschine und damit ein mit der Maschine ausgebildeter elektrischer Antrieb sowie ein mit einem derartigen Antrieb ausgebildetes Fahrzeug in einen sicheren Betriebszustand mit begrenztem Drehmoment der elektrischen Maschine überführt. Insbesondere wird dazu von einer Steuerschaltung, die im fehlerfreien, bestimmungsgemäßen Betrieb der elektrischen Maschine das von der Drehung - Drehwinkel und/oder Drehzahl - der elektrischen Maschine bestimmte Ansteuersignal den Leistungsschaltern des Umrichters zuführt, im Fehlerfall - insbesondere bei Ausfall des diese Steuerschaltung ansteuernden Rotorlagegebers - anstelle des Ansteuersignals ein Kurzschluss-Anforderungssignal abgegeben, durch das der Umrichter in den aktiven Kurzschlussbetrieb schaltet.

Bei niedrigen Drehzahlen unterhalb einer vorgegebenen Drehzahlschwelle ist der aktive Kurzschlussbetrieb wieder aufzuheben und die elektrische Maschine in den Freilaufbetrieb zu überführen. Ein Umschalten in den Freilaufbetrieb soll aber nur aus dem vorherigen aktiven Kurzschlussbetrieb heraus erfolgen, wodurch sichergestellt ist, dass der Freilaufbetrieb nur im Fehlerfall eingeleitet wird und nicht etwa im fehlerfreien, bestimmungsgemäßen Betrieb der elektrischen Maschine mit niedrigen Drehzahlen.

Die Abfolge der durch das erfindungsgemäße Verfahren auszuführenden Verfahrensschritte setzt hier an, indem in einem ersten Verfahrensschritt im aktiven Kurzschlussbetrieb ein aktueller Istwert eines Phasenstroms, der vom Umrichter in die elektrische Maschine fließt, detektiert wird. Bei einem solchen Phasenstrom handelt es sich um einen Kurzschlussstrom an einem Phasenanschluss der elektrischen Maschine im aktiven Kurzschlussbetrieb. Dieser Phasenstrom wird zwar nun nicht durch den genannten Rotorlagegeber und die genannte Steuerschaltung über den Umrichter gesteuert, sondern durch eine in der Maschine, d.h. durch eine Drehung eines Rotors der Maschine, induzierte Wechselspannung hervorgerufen. Auch in diesem Kurzschlussstrom steht jedoch eine Drehzahlinformation über die Drehzahl der Maschine zur Verfügung; seine Frequenz ist direkt proportional der Drehzahl. Diese Information wird durch Detektieren des aktuellen Istwerts des Kurzschlussstroms gewonnen.

Bevorzugt kann zum Detektieren des aktuellen Istwerts des Kurzschlussstroms eine ohnehin zum bestimmungsgemäßen Steuern der elektrischen Maschine im fehlerfreien Betrieb vorgesehene Einrichtung zum Messen der Ströme in Phasenanschlüssen der elektrischen Maschine, d.h. der Phasenströme, zum Einsatz gelangen, so dass dieser erste Verfahrensschritt mit ohnehin vorhandenen Schaltungselementen ausgeführt werden kann, dafür also keine gesonderten Einrichtungen vorgesehen werden müssen.

In einem zweiten Verfahrensschritt wird aus dem detektierten aktuellen Istwert des Phasenstroms ein eine aktuelle Drehzahlinformation beinhaltendes Drehzahlsignal abgeleitet. Insbesondere enthält das Drehzahlsignal eine Information über die der aktuellen Drehzahl der Maschine proportionale Frequenz des detektierten Kurzschlussstroms.

In einem dritten Verfahrensschritt wird die aktuelle Drehzahlinformation des Drehzahlsignals mit der vorgebbaren Drehzahlschwelle verglichen. Damit kann sehr einfach festgestellt werden, ob die aktuelle Drehzahl der Maschine größer oder kleiner ist als die vorgegebene Drehzahlschwelle; d.h. es wird sehr einfach ein Umschaltkriterium zum Übergang vom aktiven Kurzschlussbetrieb in den freilaufbetrieb gewonnen.

Sobald dabei die aktuelle Drehzahlinformation eine Drehzahl anzeigt, die die vorgebbare Drehzahlschwelle unterschreitet, wird in einem vierten Verfahrensschritt ein Umschaltsignal zum Umschalten vom aktiven Kurzschlussbetrieb in den Freilauf erzeugt, also ein Umschaltsignal, das auf dem vorerwähnten Umschaltkriterium beruht.

In einem fünften Verfahrensschritt wird mit diesem Umschaltsignal der Umrichter dahingehend angesteuert, dass die Leistungsschalter des Umrichters sämtlich in einen sperrenden, nichtleitenden Betriebszustand überführt werden und damit der Freilaufbetrieb einfach, schnell und sicher eingestellt wird.

Die Erfindung ermöglicht somit eine schnelle und sichere Überführung der elektrischen Maschine in einen gefährdungsfreien Betriebszustand im Fehlerfall unabhängig von Defekten insbesondere in einer Signalkette, die den vorerwähnten Rotorlagegeber und die genannte Steuerschaltung, über die der Umrichter vom Rotorlagegeber gesteuert wird, umfasst. Insbesondere ist für die Durchführung des Verfahrens kein Einsatz z.B. eines Mikrocontrollers erforderlich. Dabei ermöglicht ein unterschiedliches Vorgeben der Drehzahlschwelle eine sehr einfache Anpassung an unterschiedlich gestaltete und dimensionierte elektrische Maschinen und damit ausgeführte Antriebe.

Das erfindungsgemäße Verfahren ist dadurch gekennzeichnet, dass zum Ableiten des die aktuelle Drehzahlinformation beinhaltenden Drehzahlsignals
- aus dem wenigstens einen detektierten aktuellen Istwert des wenigstens einen Phasenstroms eine Periodendauer, insbesondere zwischen zwei Nulldurchgängen, des wenigstens einen Phasenstroms detektiert wird,
- mit Beginn jeder Periodendauer des wenigstens einen Phasenstroms wenigstens ein Zeitsignal ausgelöst wird, das
   ∘ während eines vorgegebenen Zeitintervalls innerhalb der Periodendauer des wenigstens einen Phasenstroms einen ersten und
   ∘ während der übrigen Periodendauer des wenigstens einen Phasenstroms einen zweiten
      Signalpegel aufweist,
- das wenigstens eine Zeitsignal fortlaufend über je eine Periodendauer gemittelt wird und ein daraus gebildeter Mittelwert des wenigstens einen Zeitsignals das die aktuelle Drehzahlinformation beinhaltende Drehzahlsignal bildet.

Bei dieser detaillierten Weiterbildung des zweiten Verfahrensschritts des erfindungsgemäßen Verfahrens, bei dem insgesamt aus dem detektierten aktuellen Istwert des Phasenstroms das die aktuelle Drehzahlinformation beinhaltende Drehzahlsignal abgeleitet wird, wird zunächst die Periodendauer des Phasenstroms, hier des Kurzschlussstroms, ermittelt, die umgekehrt proportional zu der Frequenz des detektierten Kurzschlussstroms und damit zu der gesuchten Drehzahl ist. Bevorzugt erfolgt wegen der leichten Messbarkeit die Ermittlung der Periodendauer, also deren Detektion, zwischen je zwei aufeinanderfolgenden Nulldurchgängen des - insbesondere wenigstens nahezu sinusförmigen - Kurzschlussstroms. Diese Nulldurchgänge sind sehr einfach durch z.B. Schmitt-Triggerschaltungen erfassbar.

Dann wird mit dem Nulldurchgang zu Beginn jeder Periodendauer des detektierten Kurzschlussstroms ein Zeitsignal ausgelöst. Das Auslösen dieses Zeitsignals ist dadurch besonders einfach und zuverlässig, dass die Nulldurchgänge des Kurzschlussstroms durch z.B. Schmitt-Triggerschaltungen als präzise erfassbare Signalflanken dargestellt sind. Das Zeitsignal weist während eines vorgegebenen Zeitintervalls innerhalb der Periodendauer des Kurzschlussstroms einen ersten und während der übrigen Periodendauer des Kurzschlussstroms einen zweiten Signalpegel auf. Der prozentuale Zeitanteil des ersten und des zweiten Signalpegels am gesamten Signalverlauf des Zeitsignals innerhalb der Periodendauer des Kurzschlussstroms ändert sich also unmittelbar mit dem Verhältnis des vorgegebenen Zeitintervalls zur Periodendauer des Kurzschlussstroms, ist also ein Maß für die Periodendauer des Kurzschlussstroms relativ zu dem vorgegebenen Zeitintervall. Dabei kann das Zeitsignal bevorzugt mit einer monostabilen Kippschaltung erzeugt werden, deren Zeitkonstante das vorgegebene Zeitintervall bildet und dieses kürzer gewählt wird als die Periodendauer des Kurzschlussstroms zumindest in demjenigen Zeitbereich, in dem diese Periodendauer an der Drehzahlschwelle liegt. Die monostabile Kippschaltung gibt dann ein Signal ab, das vom Beginn der Periodendauer des Kurzschlussstroms an zunächst bis zum Ablauf der Zeitkonstanten den ersten Signalpegel aufweist und dann bis zum Beginn der nächsten Periodendauer auf den zweiten Signalpegel umschaltet, also genau das Zeitsignal.

Abschließend wird nun das Zeitsignal fortlaufend über je eine Periodendauer gemittelt. Der daraus gebildete Mittelwert des Zeitsignals ist unmittelbar ein Maß für das Verhältnis des vorgegebenen Zeitintervalls zur Periodendauer des Kurzschlussstroms, ist also ein Maß für die Periodendauer des Kurzschlussstroms relativ zu dem vorgegebenen Zeitintervall. Wird bevorzugt der erste Signalpegel des Zeitsignals größer gewählt als der zweite Signalpegel, nimmt der Mittelwert des Zeitsignals zu, wenn sich die Periodendauer des Kurzschlussstroms relativ zum vorgegebenen Zeitintervall verringert. Der Mittelwert steigt also mit der Frequenz des Kurzschlussstroms und damit der Drehzahl der Maschine. Damit bildet dieser Mittelwert sehr einfach und genau das die aktuelle Drehzahlinformation beinhaltende Drehzahlsignal. Dieses wiederum kann sehr einfach mit einem ebenfalls als Signalpegel vorgebbaren Referenzsignal verglichen werden, hier der Drehzahlschwelle, und daraus das Umschaltkriterium bzw. eine Umschaltinformation für das Umschalten in den Freilaufbetrieb erhalten werden.

Alle diese Verfahrensschritte zur Signalverarbeitung können mit analogen Signalen ausgeführt werden und sind damit unabhängig von der Funktionsfähigkeit digitaler Steuerungen.

In einer weiteren bevorzugten Ausführungsform ist das erfindungsgemäße Verfahren dadurch gekennzeichnet, dass bei einer durch einen wenigstens zweiphasigen, bevorzugt dreiphasigen, Umrichter gespeisten, wenigstens zweiphasigen, bevorzugt dreiphasigen, elektrischen Maschine
- aktuelle Istwerte wenigstens zweier, bevorzugt genau zweier, Phasenströme unabhängig voneinander detektiert werden,
- aus jedem der detektierten aktuellen Istwerte der Phasenströme je ein eine aktuelle Drehzahlinformation beinhaltendes Drehzahlsignal abgeleitet wird,
- die aktuelle Drehzahlinformation jedes Drehzahlsignals für sich mit der vorgebbaren Drehzahlschwelle verglichen wird,
- sobald die aktuelle Drehzahlinformation je eines der Drehzahlsignale eine Drehzahl anzeigt, die die vorgebbare Drehzahlschwelle unterschreitet, aus dem Vergleich dieses Drehzahlsignals mit der Drehzahlschwelle je ein einzelnes Umschaltsignal zum Umschalten vom aktiven Kurzschlussbetrieb in den Freilauf erzeugt wird,
- wenn zu jedem der Drehzahlsignale ein einzelnes Umschaltsignal zum Umschalten vom aktiven Kurzschlussbetrieb in den Freilauf erzeugt wird, d.h. wenn alle einzelnen Umschaltsignale übereinstimmend eine Information zum Umschalten vom aktiven Kurzschlussbetrieb in den Freilauf beinhalten, aus allen einzelnen Umschaltsignalen ein eine Information zum Umschalten vom aktiven Kurzschlussbetrieb in den Freilauf beinhaltendes, resultierendes Umschaltsignal gebildet und
- mit dem resultierenden Umschaltsignal der Umrichter angesteuert wird.

Bei dieser Ausführungsform werden die oben beschriebenen ersten drei Verfahrensschritte für jede Phase der Maschine voneinander getrennt, also parallel zueinander, ausgeführt. Bevorzugt ist dabei eine Detektion zweier der Phasenströme der Maschine. Wahlweise können bei einer drei- oder mehrphasigen Maschine auch mehr als zwei der Phasenströme zur voneinander unabhängigen Ermittlung der Drehzahlinformation herangezogen werden, doch steigt dadurch der zu treibende Aufwand. Durch die unabhängige, parallele Ermittlung der Drehzahlinformation wird eine Redundanz geschaffen, die eine noch höhere Fehlersicherheit und Zuverlässigkeit des erfindungsgemäßen Verfahrens ermöglicht.

Dieser Ausführungsform gemäß wird auch der vierte der obigen Verfahrensschritte für jeden detektierten Phasenstrom gesondert unabhängig durchgeführt. Zu jedem detektierten Phasenstrom, d.h. zu jeder für die Detektion herangezogenen Phase der Maschine, wird dabei ein einzelnes Umschaltsignal erzeugt. Es stehen also so viele einzelne Umschaltsignale zur redundanten Auswertung zur Verfügung, wie Phasen der Maschine zur Detektion herangezogen werden. Aus diesen wird ein resultierendes Umschaltsignal gebildet, durch das dann und nur dann ein Umschalten in den Freilaufbetrieb veranlasst wird, wenn jedes der einzelnen Umschaltsignale eine diesbezügliche Information enthält, wenn also jedes der einzelnen Umschaltsignale dieses Umschalten anzeigt. Damit ist sichergestellt, dass das Umschalten in den Freilaufbetrieb nicht unkontrolliert bei fehlerhafter Ausführung des Verfahrens zur Ermittlung eines der einzelnen Umschaltsignale erfolgt. Bevorzugt wird die Bildung des resultierenden Umschaltsignals aus den einzelnen Umschaltsignalen mit einer UND-Funktion vorgenommen.

Nach einer weiteren bevorzugten Ausführungsform des erfindungsgemäßen Verfahrens wird mit dem Umschaltsignal oder dem resultierenden Umschaltsignal der Umrichter nur dann zum Umschalten vom aktiven Kurzschlussbetrieb in den Freilauf angesteuert, wenn sich der Umrichter im aktiven Kurzschlussbetrieb befindet. Um dies auf einfache Weise sicherzustellen, werden bevorzugt das Umschaltsignal - im Fall der Detektion nur eines Phasenstroms - oder wahlweise das resultierende Umschaltsignal oder die einzelnen Umschaltsignale über eine UND-Funktion zusätzlich mit dem Kurzschluss-Anforderungssignal verknüpft, so dass der Freilaufbetrieb bei niedrigen Drehzahlen nur dann eingeschaltet wird, wenn der aktive Kurzschlussbetrieb angefordert ist, d.h. im Fehlerfall.

Die oben genannte Aufgabe wird weiterhin bei einer Schutzvorrichtung der eingangs genannten Art gelöst durch
- wenigstens eine Strommessstufe zum Detektieren wenigstens eines aktuellen Istwerts wenigstens eines Phasenstroms der Maschine im aktiven Kurzschlussbetrieb,
- wenigstens eine Drehzahlsignal-Erzeugungsstufe zum Ableiten eines eine aktuelle Drehzahlinformation beinhaltenden Drehzahlsignals aus dem wenigstens einen detektierten aktuellen Istwert des wenigstens einen Phasenstroms,
- wenigstens eine Vergleichsstufe
   ∘ zum Vergleichen der aktuellen Drehzahlinformation des Drehzahlsignals mit der vorgebbaren Drehzahlschwelle,
   ∘ zum Erzeugen eines Umschaltsignals zum Umschalten vom aktiven Kurzschlussbetrieb in den Freilauf, sobald die aktuelle Drehzahlinformation eine Drehzahl anzeigt, die die vorgebbare Drehzahlschwelle unterschreitet, und
   ∘ zum Ansteuern des Umrichters mit diesem Umschaltsignal.

Dabei ist die wenigstens eine Strommessstufe zum Durchführen des vorstehend beschriebenen ersten Verfahrensschritts, die wenigstens eine Drehzahlsignal-Erzeugungsstufe zum Durchführen des vorstehend beschriebenen zweiten Verfahrensschritts und die wenigstens eine Vergleichsstufe zum Durchführen des vorstehend beschriebenen dritten, vierten und fünften Verfahrensschritts ausgebildet, so dass die obigen Erläuterungen unmittelbar für diese Stufen gelten. Als die wenigstens eine Vergleichsstufe kann wenigstens eine Komparatorstufe eingesetzt werden. Zusätzlich kann die Komparatorstufe auch als Fensterkomparator ausgeführt sein, um die Möglichkeit zu schaffen, ein Toleranzfenster um die gemessene Drehzahl zu legen.

Erfindungsgemäß umfasst die wenigstens eine Drehzahlsignal-Erzeugungsstufe der erfindungsgemäßen Schutzvorrichtung zum Ableiten des die aktuelle Drehzahlinformation beinhaltenden Drehzahlsignals, d.h. zum Ausführen der vorstehend erläuterten, detaillierten Weiterbildung des zweiten Verfahrensschritts des erfindungsgemäßen Verfahrens:
- wenigstens eine Periodendauer-Detektionsstufe
   ∘ zum Detektieren einer Periodendauer, insbesondere zwischen zwei Nulldurchgängen, des wenigstens einen detektierten aktuellen Istwerts des wenigstens einen Phasenstroms und
   ∘ zum Erzeugen eines diese Periodendauer aufweisenden Auslösesignals,
- wenigstens eine Zeitstufe, die dafür vorgesehen ist,
   ∘ das Auslösesignal zugeführt zu erhalten und
   ∘ mit Beginn jeder Periodendauer des wenigstens einen Phasenstroms wenigstens ein Zeitsignal auszulösen, das
      ▪ während eines vorgegebenen Zeitintervalls innerhalb der Periodendauer des wenigstens einen Phasenstroms einen ersten und
      ▪ während der übrigen Periodendauer des wenigstens einen Phasenstroms einen zweiten
      Signalpegel aufweist,
- und wenigstens eine Mittelwert-Bildungsstufe
   ∘ zum fortlaufenden Mitteln des wenigstens einen Zeitsignals über je eine Periodendauer und
   ∘ zum daraus Gewinnen eines Mittelwerts des wenigstens einen Zeitsignals,
      wobei der Mittelwert das die aktuelle Drehzahlinformation beinhaltende Drehzahlsignal bildet.

Bevorzugt ist die wenigstens eine Periodendauer-Detektionsstufe mit wenigstens einer Schmitt-Triggerschaltung ausgestaltet, mit der aus den Nulldurchgängen des Phasenstroms ein steilflankiges, störungsarmes Auslösesignal gebildet werden kann, das eine präzise Bestimmung der Periodendauer des Phasenstroms und eine sichere Funktion der nachfolgenden wenigstens einen Zeitstufe gewährleistet. Die wenigstens eine Zeitstufe ist vorteilhaft mit wenigstens einer monostabilen Kippschaltung - kurz: Monoflop - ausgestaltet, der das Auslösesignal zugeführt wird und die daraufhin während des vorgegebenen Zeitintervalls den ersten Signalpegel abgibt, d.h. ein Rechtecksignal erzeugt mit der Periodendauer des Phasenstroms und einem durch das vorgegebene Zeitintervall und die Periodendauer bestimmten Tastverhältnis. Die wenigstens eine Mittelwert-Bildungsstufe ist sehr einfach und bevorzugt mit wenigstens einem Tiefpass ausführbar.

Im Übrigen gelten auch hier die vorstehenden Erläuterungen der detaillierten Weiterbildung des zweiten Verfahrensschritts des erfindungsgemäßen Verfahrens für die genannten Stufen entsprechend.

Alle vorbeschriebenen Stufen der erfindungsgemäßen Schutzvorrichtung sind vorteilhaft zum Verarbeiten analoger Signale ausgebildet.

Eine weitere vorteilhafte Ausgestaltung der erfindungsgemäßen Schutzvorrichtung ist dadurch gekennzeichnet, dass bei einer durch einen wenigstens zweiphasigen, bevorzugt dreiphasigen, Umrichter gespeisten, wenigstens zweiphasigen, bevorzugt dreiphasigen, elektrischen Maschine vorgesehen sind:
- wenigstens zwei, bevorzugt genau zwei, Strommessstufen zum Detektieren aktueller Istwerte wenigstens zweier, bevorzugt genau zweier, Phasenströme der Maschine im aktiven Kurzschlussbetrieb unabhängig voneinander,
- wenigstens zwei, bevorzugt genau zwei, Drehzahlsignal-Erzeugungsstufen zum Ableiten je eines eine aktuelle Drehzahlinformation beinhaltenden Drehzahlsignals aus jedem der detektierten aktuellen Istwerte der Phasenströme,
- wenigstens zwei, bevorzugt genau zwei, Vergleichsstufen
   ∘ zum Vergleichen der aktuellen Drehzahlinformation jedes Drehzahlsignals für sich mit der vorgebbaren Drehzahlschwelle,
   ∘ zum Erzeugen je eines einzelnen Umschaltsignals zum Umschalten vom aktiven Kurzschlussbetrieb in den Freilauf, sobald die aktuelle Drehzahlinformation je eines der Drehzahlsignale eine Drehzahl anzeigt, die die vorgebbare Drehzahlschwelle unterschreitet,
   und
- eine Verknüpfungsstufe
   ∘ zum Verknüpfen aller einzelnen Umschaltsignale aller Vergleichsstufen derart, dass aus allen einzelnen Umschaltsignalen ein eine Information zum Umschalten vom aktiven Kurzschlussbetrieb in den Freilauf beinhaltendes, resultierendes Umschaltsignal gebildet wird, wenn zu jedem der Drehzahlsignale ein einzelnes Umschaltsignal zum Umschalten vom aktiven Kurzschlussbetrieb in den Freilauf erzeugt wird, d.h. wenn alle einzelnen Umschaltsignale übereinstimmend eine Information zum Umschalten vom aktiven Kurzschlussbetrieb in den Freilauf beinhalten,
   ∘ wahlweise zum Verknüpfen aller einzelnen Umschaltsignale aller Vergleichsstufen oder des resultierenden Umschaltsignals mit einem Kurzschluss-Anforderungssignal, das zum Überführen des Umrichters bei einer fehlerhaften Ansteuerung in den aktiven Kurzschlussbetrieb vorgesehen ist, derart, dass mit dem resultierenden Umschaltsignal der Umrichter nur dann zum Umschalten vom aktiven Kurzschlussbetrieb in den Freilauf angesteuert wird, wenn sich der Umrichter im aktiven Kurzschlussbetrieb befindet,
   ∘ und zum Ansteuern des Umrichters mit diesem resultierenden Umschaltsignal.

Zur redundanten Bildung der einzelnen Umschaltsignale und damit des resultierenden Umschaltsignals sind bei dieser Ausgestaltung wenigstens zwei, bevorzugt genau zwei, parallele Signalverarbeitungszweige vorgesehen, die jeder für sich in der vorbeschriebenen Weise ausgebildet sind und voneinander unabhängig jeder ein einzelnes Umschaltsignal bereitstellen. Die einzelnen Umschaltsignale werden durch die bevorzugt als UND-Schaltung ausgebildete Verknüpfungsstufe miteinander und wahlweise zusätzlich mit dem Kurzschluss-Anforderungssignal gemäß einer logischen UND-Funktion verknüpft.

Im Übrigen gelten auch hier die vorstehenden Erläuterungen der diesbezüglichen Weiterbildung des erfindungsgemäßen Verfahrens für die genannten Stufen entsprechend.

In einer Abwandlung der Verknüpfungsstufe und der durch sie auszuführenden Verfahrensschritte könnten auch die einzelnen Umschaltsignale miteinander durch z.B. eine ODER-Funktion und das Resultat dieser ODER-Funktion durch eine UND-Funktion mit dem Kurzschluss-Anforderungssignal verknüpft werden. Dies ergäbe aber eine abgewandelte Form der Redundanz dahingehend, dass die Umschaltung in den Freilaufbetrieb auch vorgenommen würde, wenn z.B. eine der Strommessstufen, eine der Drehzahlsignal-Erzeugungsstufen und/oder eine der Vergleichsstufen fehlerhaft wäre.

In einer weiter bevorzugten Ausführungsform der erfindungsgemäßen Schutzvorrichtung ist die wenigstens eine Strommessstufe durch wenigstens eine jener Strommessstufen gebildet, die für eine Steuerung eines bestimmungsgemäßen, fehlerfreien Betriebs der elektrischen Maschine vorgesehen sind. Dies ermöglicht einen besonders einfachen und kostengünstigen Aufbau der Schutzvorrichtung.

Die eingangs genannte Aufgabe wird auch gelöst durch einen elektrischen Antrieb, der durch wenigstens eine elektrische Maschine der vorhergehend beschriebenen Art und/oder durch eine Schutzvorrichtung der vorgenannten Art gekennzeichnet ist.

Die eingangs genannte Aufgabe wird schließlich auch gelöst durch ein Fahrzeug, insbesondere ein Straßenfahrzeug, das durch einen elektrischen Antrieb der vorbezeichneten Art und/oder durch eine Schutzvorrichtung der vorbeschriebenen Art gekennzeichnet ist.

Ein derartiger Antrieb und ein derartiges Fahrzeug weisen die vorstehend beschriebenen Merkmale und Vorteile auf.

### Kurze Beschreibung der Zeichnungen

Ein Ausführungsbeispiel der Erfindung ist in der Zeichnung dargestellt und wird im nachfolgenden näher beschrieben, wobei übereinstimmende Elemente in allen Figuren mit denselben Bezugszeichen versehen sind und auf eine wiederholte Beschreibung dieser Elemente verzichtet wird. Es zeigen:
- Figur 1: ein grob schematisches Blockschaltbild eines Beispiel für eine erfindungsgemäße Schutzvorrichtung,
- Figur 2: ein erstes Beispiel für zeitliche Signalverläufe in einem ersten, beispielhaften Betriebsfall der Schutzvorrichtung nach Figur 1, und
- Figur 3: ein zweites Beispiel für zeitliche Signalverläufe in einem zweiten, beispielhaften Betriebsfall der Schutzvorrichtung nach Figur 1.

### Bevorzugte Ausführungsform der Erfindung

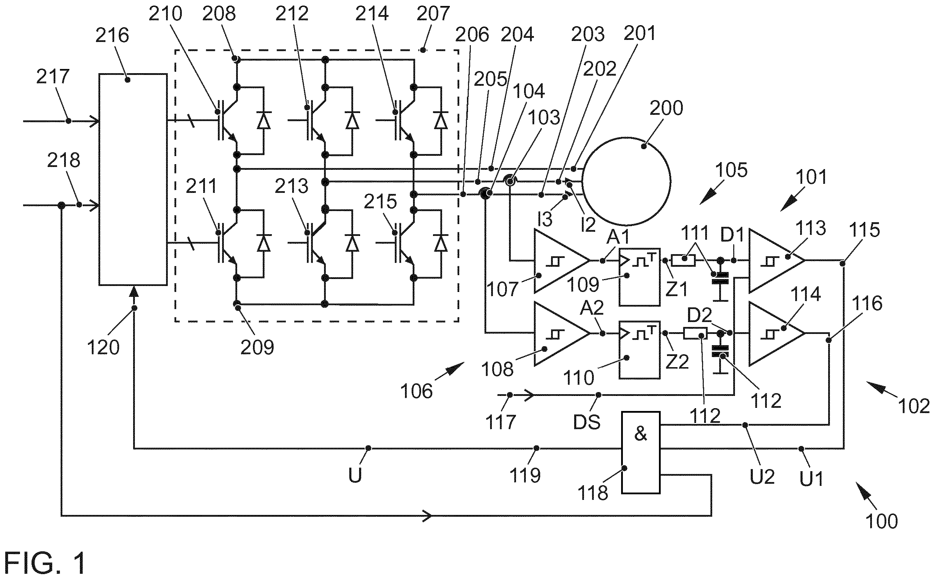

In Figur 1 ist mit dem Bezugszeichen 100 ein Beispiel für eine erfindungsgemäße Schutzvorrichtung zum Begrenzen eines Drehmoments einer elektrischen Maschine 200 bezeichnet und in grob schematischer Darstellung als Blockschaltbild wiedergegeben. Die elektrische Maschine 200 ist dreiphasig ausgebildet, insbesondere als Drehstrommaschine, bevorzugt Synchronmaschine, und demgemäß mit einem ersten, einem zweiten und einem dritten Phasenanschluss 201, 202, 203 versehen. Mit den Phasenanschlüssen 201, 202, 203 ist die Maschine 200 an einen ersten, einen zweiten bzw. einen dritten Ausgangsanschluss 204, 205 bzw. 206 eines dreiphasigen Umrichters 207 angeschlossen und wird durch diesen gespeist. Der Umrichter 207 ist in an sich bekannter Weise mit drei Halbbrücken aus je zwei in Reihenschaltung zwischen zwei Versorgungsspannungsanschlüssen 208, 209 angeordneten Leistungshalbleiterschaltern - kurz: Leistungsschaltern - 210, 211, 212, 213, 214 und 215 ausgestaltet; die Ausgangsanschlüsse 204, 205 bzw. 206 des Umrichters 207 werden durch Mittelanzapfungen dieser drei Halbbrücken gebildet. Eingangsanschlüsse der Leistungsschalter 210, 211, 212, 213, 214 und 215 sind mit einer Treiberstufe 216 verbunden. Die Treiberstufe 216 weist einen Ansteuersignaleingang 217 und einen Kurzschluss-Anforderungssignaleingang 218 auf.

In Figur 1 nicht dargestellt sind eine Steuerschaltung und ein Rotorlagegeber der elektrischen Maschine 200. Der Rotorlagegeber ist dazu ausgebildet, von der elektrischen Maschine 200 eine Drehwinkel- bzw. eine Drehzahlinformation zu gewinnen und der Steuerschaltung zuzuleiten. Die Steuerschaltung gewinnt daraus ein von der Drehung - Drehwinkel und/oder Drehzahl - der elektrischen Maschine 200 bestimmtes Ansteuersignal, durch das die Leistungsschalter 210, 211, 212, 213, 214 und 215 des Umrichters 207 der Drehung der Maschine 200 entsprechend zum Schalten der in die Maschine 200 zu speisenden Phasenströme in den Phasenanschlüssen 201, 202, 203 angesteuert werden. Zu diesem Zweck wird das Ansteuersignal über den Ansteuersignaleingang 217 der Treiberstufe 216 zugeführt.

In dem Fehlerfall, der als Ausgangssituation der Erfindung angenommen wird, sind zwar der Umrichter 207 mit seinen Leistungsschaltern 210, 211, 212, 213, 214 und 215 als solcher sowie die Treiberstufe 216 noch wenigstens für den nachbeschriebenen Zweck funktionsfähig, jedoch ist der Rotorlagegeber der elektrischen Maschine 200 ausgefallen oder arbeitet fehlerhaft, wodurch das Ansteuersignal am Ansteuersignaleingang 217 ausgefallen ist und daher die Treiberstufe 216 die Maschine 200 nicht mehr fehlerfrei ansteuern kann. Die Maschine 200 lässt sich damit nicht mehr drehwinkel- und/oder drehzahlabhängig steuern, weil vom Rotorlagegeber keine Drehzahlinformation mehr vorliegt. Eine vergleichbare Ausgangssituation liegt vor, wenn die Bildung des am Ansteuersignaleingang 217 bereitzustellenden Ansteuersignals ausgefallen oder fehlerhaft ist.

Allerdings sind die einzelnen Leistungsschalter 210, 211, 212, 213, 214 und 215 des Umrichters 207 sowie die Treiberstufe 216 weiterhin noch schaltbar, so dass durch sie der aktive Kurzschlussbetrieb der elektrischen Maschine 200 eingeleitet werden kann, d.h. der Umrichter 207 schaltet die elektrische Maschine 200 bei einem derartigen Fehler in den aktiven Kurzschlussbetrieb. Insbesondere wird dazu von der genannten Steuerschaltung anstelle des von der Drehung - Drehwinkel und/oder Drehzahl - der elektrischen Maschine 200 bestimmten Ansteuersignals im Fehlerfall des Ausfalls des die Steuerschaltung ansteuernden Rotorlagegebers ein Kurzschluss-Anforderungssignal abgegeben und über den Kurzschluss-Anforderungssignaleingang 218 der Treiberstufe 216 zugeführt, durch das der Umrichter 207 in den aktiven Kurzschlussbetrieb schaltet.

Auf diese Weise ist die elektrische Maschine 200 dazu vorgesehen, bei einer fehlerhaften Ansteuerung des Umrichters 200 in den aktiven Kurzschlussbetrieb überführt zu werden.

Erfindungsgemäß ist die Maschine 200 weiterhin dazu vorgesehen, bei Unterschreiten einer Drehzahlschwelle DS in einen Freilaufbetrieb überführt zu werden. Dazu dient die Schutzvorrichtung 100, die in dem dargestellten Ausführungsbeispiel nach Figur 1 zwei parallele Signalverarbeitungszweige - einen ersten Signalverarbeitungszweig 101 und einen zweiten Signalverarbeitungszweig 102 - umfasst, die wie folgt beschrieben ausgebildet sind.

Der erste Signalverarbeitungszweig 101 umfasst eine erste Strommessstufe 103 zum fortlaufenden Detektieren eines aktuellen Istwerts eines im zweiten Phasenanschluss 202 der Maschine 200 fließenden zweiten Phasenstroms I2. Im aktiven Kurzschlussbetrieb ist dies der Istwert des Kurzschlussstroms im zweiten Phasenanschluss 202 der Maschine 200. Entsprechend umfasst der zweite Signalverarbeitungszweig 102 eine zweite Strommessstufe 104 zum fortlaufenden Detektieren eines aktuellen Istwerts eines im dritten Phasenanschluss 203 der Maschine 200 fließenden dritten Phasenstroms I3. Im aktiven Kurzschlussbetrieb ist dies der Istwert des Kurzschlussstroms im dritten Phasenanschluss 203 der Maschine 200. Das Detektieren der Istwerte der Phasenströme I2, I3 erfolgt redundant unabhängig voneinander. Bevorzugt handelt es sich bei den Strommessstufen 103, 104 um diejenigen Strommessstufen, die für eine Steuerung eines bestimmungsgemäßen, fehlerfreien Betriebs der elektrischen Maschine 200 vorgesehen sind, so dass hier kein zusätzlicher Schaltungsaufwand entsteht.

Der erste Signalverarbeitungszweig 101 umfasst weiterhin eine erste Drehzahlsignal-Erzeugungsstufe 105 zum Ableiten eines eine aktuelle Drehzahlinformation beinhaltenden ersten Drehzahlsignals D1 aus dem detektierten aktuellen Istwert des zweiten Phasenstroms I2.

Dabei enthält die erste Drehzahlsignal-Erzeugungsstufe 105 eine erste Periodendauer-Detektionsstufe 107 zum Detektieren der Periodendauer P des detektierten aktuellen Istwerts des zweiten Phasenstroms I2. Vorteilhaft ist die erste Periodendauer-Detektionsstufe 107 mit einer Schmitt-Triggerschaltung ausgebildet, der der insbesondere sinusförmige aktuelle Istwert des zweiten Phasenstroms I2 zugeführt wird und die daraus ein rechteckförmiges, die Periodendauer P aufweisendes erstes Auslösesignal A1 erzeugt, dessen Schaltflanken an Nulldurchgängen des detektierten aktuellen Istwerts des zweiten Phasenstroms I2 auftreten, so dass die Periodendauer P zwischen zwei Nulldurchgängen des detektierten aktuellen Istwerts des zweiten Phasenstroms I2 bestimmt wird.

Weiterhin enthält die erste Drehzahlsignal-Erzeugungsstufe 105 eine der ersten Periodendauer-Detektionsstufe 107 nachgeschaltete erste Zeitstufe 109, der das erste Auslösesignal A1 zugeführt wird. Die erste Zeitstufe 109 ist dazu ausgebildet, mit Beginn jeder Periodendauer P des zweiten Phasenstroms I2 ein erstes Zeitsignal Z1 auszulösen, das während eines vorgegebenen Zeitintervalls T innerhalb der Periodendauer P des zweiten Phasenstroms I2 einen ersten Signalpegel SP1 und während der übrigen Periodendauer P des zweiten Phasenstroms I2 einen zweiten Signalpegel SP2 aufweist. Insbesondere ist hier der erste Signalpegel SP1 als hoher Signalpegel und der zweite Signalpegel SP2 als niedriger Signalpegel gestaltet. Bevorzugt ist die erste Zeitstufe 109 mit einer monostabilen Kippschaltung - kurz: Monoflop - ausgebildet, die - ausgelöst durch eine Schaltflanke, und zwar hier eine negative Schaltflanke zu Beginn jeder Periodendauer P - einen Impuls mit einer zeitlichen Länge des vorgegebenen Zeitintervalls T und dem ersten Signalpegel SP1 abgibt und danach auf den zweiten Signalpegel SP2 zurückfällt. Dabei ist das vorgegebene Zeitintervall T kürzer gewählt als die Periodendauern P, die in dem von der Schutzvorrichtung 100 zu überwachenden Drehzahlbereich auftreten.

Die erste Drehzahlsignal-Erzeugungsstufe 105 enthält ferner eine der ersten Zeitstufe 109 nachgeschaltete erste Mittelwert-Bildungsstufe 111 zum fortlaufenden Mitteln des ersten Zeitsignals Z1 über je eine Periodendauer P. Im dargestellten Ausführungsbeispiel ist die erste Mittelwert-Bildungsstufe 111 mit einem einfachen RC-Tiefpass gebildet. In der ersten Mittelwert-Bildungsstufe 111 wird ein Mittelwert des ersten Zeitsignals Z1 gewonnen. Dieser Mittelwert ist ein direktes Maß für das Verhältnis zwischen dem vorgegebenen Zeitintervall T und der Periodendauer P und damit für die Drehzahl der elektrischen Maschine 200 und bildet daher unmittelbar das die aktuelle Drehzahlinformation beinhaltende erste Drehzahlsignal D1 am Ausgangsanschluss der ersten Mittelwert-Bildungsstufe 111, d.h. an deren Kapazität.

Der zweite Signalverarbeitungszweig 102 umfasst in zum ersten Signalverarbeitungszweig 101 analoger Weise eine zweite Drehzahlsignal-Erzeugungsstufe 106 zum Ableiten eines eine aktuelle Drehzahlinformation beinhaltenden zweiten Drehzahlsignals D2 aus dem detektierten aktuellen Istwert des dritten Phasenstroms I3.

Dabei enthält die zweite Drehzahlsignal-Erzeugungsstufe 106 eine zweite Periodendauer-Detektionsstufe 108 zum Detektieren der Periodendauer P des detektierten aktuellen Istwerts des dritten Phasenstroms I3. Vorteilhaft ist auch die zweite Periodendauer-Detektionsstufe 108 mit einer Schmitt-Triggerschaltung ausgebildet, der der insbesondere sinusförmige aktuelle Istwert des dritten Phasenstroms I3 zugeführt wird und die daraus ein rechteckförmiges, die Periodendauer P aufweisendes zweites Auslösesignal A2 erzeugt, dessen Schaltflanken an Nulldurchgängen des detektierten aktuellen Istwerts des dritten Phasenstroms I3 auftreten, so dass die Periodendauer P zwischen zwei Nulldurchgängen des detektierten aktuellen Istwerts des dritten Phasenstroms I3 bestimmt wird.

Weiterhin enthält die zweite Drehzahlsignal-Erzeugungsstufe 106 eine der zweiten Periodendauer-Detektionsstufe 108 nachgeschaltete zweite Zeitstufe 110, der das zweite Auslösesignal A2 zugeführt wird. Die zweite Zeitstufe 110 ist dazu ausgebildet, mit Beginn jeder Periodendauer P des dritten Phasenstroms I3 ein zweites Zeitsignal Z2 auszulösen, das während des vorgegebenen Zeitintervalls T innerhalb der Periodendauer P des dritten Phasenstroms I3 den ersten Signalpegel SP1 und während der übrigen Periodendauer P des dritten Phasenstroms I3 den zweiten Signalpegel SP2 aufweist. Bevorzugt ist auch die zweite Zeitstufe 110 mit einem Monoflop ausgebildet, das wieder - ausgelöst auch hier durch eine negative Schaltflanke zu Beginn jeder Periodendauer P - einen Impuls mit einer zeitlichen Länge des vorgegebenen Zeitintervalls T und dem ersten Signalpegel SP1 abgibt und danach auf den zweiten Signalpegel SP2 zurückfällt.

Die zweite Drehzahlsignal-Erzeugungsstufe 106 enthält ferner eine der zweiten Zeitstufe 110 nachgeschaltete zweite Mittelwert-Bildungsstufe 112 zum fortlaufenden Mitteln des zweiten Zeitsignals Z2 über je eine Periodendauer P. Auch die zweite Mittelwert-Bildungsstufe 112 ist vorteilhaft mit einem einfachen RC-Tiefpass gebildet. In der zweiten Mittelwert-Bildungsstufe 112 wird ein Mittelwert des zweiten Zeitsignals Z2 gewonnen, der ebenfalls ein direktes Maß für das Verhältnis zwischen dem vorgegebenen Zeitintervall T und der Periodendauer P und damit für die Drehzahl der elektrischen Maschine 200 ist und daher unmittelbar das die aktuelle Drehzahlinformation beinhaltende zweite Drehzahlsignal D2 am Ausgangsanschluss der zweiten Mittelwert-Bildungsstufe 112, d.h. an deren Kapazität, bildet.

Der erste Signalverarbeitungszweig 101 umfasst endlich eine erste Vergleichsstufe 113, der an einem ersten Eingangsanschluss das erste Drehzahlsignal D1 vom Ausgangsanschluss der ersten Mittelwert-Bildungsstufe 111 zugeführt wird. Ein zweiter Eingangsanschluss der ersten Vergleichsstufe 113 ist mit einer Referenzsignalleitung 117 verbunden. Über die Referenzsignalleitung 117 wird ein ebenfalls als Signalpegel vorgebbares Referenzsignal, hier die Drehzahlschwelle DS, zugeführt. In der ersten Vergleichsstufe 113, die bevorzugt mit einer Komparatorstufe ausgebildet ist, wird ein Vergleich der aktuellen Drehzahlinformation des ersten Drehzahlsignals D1 mit der vorgebbaren Drehzahlschwelle DS als einfacher Vergleich analoger Signalpegel vorgenommen. Als Ergebnis dieses Vergleichs wird an einem Ausgangsanschluss 115 der ersten Vergleichsstufe 113 ein erstes einzelnes Umschaltsignal U1 zum Umschalten vom aktiven Kurzschlussbetrieb in den Freilauf ausgegeben, sobald die aktuelle Drehzahlinformation des ersten Drehzahlsignals D1 eine Drehzahl anzeigt, die die vorgebbare Drehzahlschwelle DS unterschreitet.

In dazu übereinstimmender Weise umfasst der zweite Signalverarbeitungszweig 102 eine zweite Vergleichsstufe 114, der an einem ersten Eingangsanschluss das zweite Drehzahlsignal D2 vom Ausgangsanschluss der zweiten Mittelwert-Bildungsstufe 112 zugeführt wird. Ein zweiter Eingangsanschluss der zweiten Vergleichsstufe 114 ist ebenfalls mit der Referenzsignalleitung 117 zum Zuführen der Drehzahlschwelle DS verbunden. In der zweiten Vergleichsstufe 114, die bevorzugt auch mit einer Komparatorstufe ausgebildet ist, wird ein Vergleich der aktuellen Drehzahlinformation des zweiten Drehzahlsignals D2 mit der vorgebbaren Drehzahlschwelle DS als einfacher Vergleich analoger Signalpegel vorgenommen. Als Ergebnis dieses Vergleichs wird an einem Ausgangsanschluss 116 der zweiten Vergleichsstufe 114 ein zweites einzelnes Umschaltsignal U2 zum Umschalten vom aktiven Kurzschlussbetrieb in den Freilauf ausgegeben, sobald die aktuelle Drehzahlinformation des zweiten Drehzahlsignals D2 eine Drehzahl anzeigt, die die vorgebbare Drehzahlschwelle DS unterschreitet.

Die beschriebenen Elemente des ersten und des zweiten Signalverarbeitungszweigs 101, 102 sind identisch dimensioniert. Daher liefern die beiden Signalverarbeitungszweige 101, 102 jeder für sich in der vorbeschriebenen Weise bei einwandfreier Funktion der Schutzvorrichtung 100 unabhängig voneinander und parallel zueinander übereinstimmende Signale, insbesondere übereinstimmende einzelne Umschaltsignale U1, U2. Diese redundante Bildung der einzelnen Umschaltsignale U1, U2 wird dazu genutzt, die Zuverlässigkeit der Funktionsweise der Schutzvorrichtung 100 zu erhöhen. Dazu umfasst die Schutzvorrichtung 100 eine Verknüpfungsstufe 118 zum Verknüpfen der einzelnen Umschaltsignale U1, U2 der beiden Vergleichsstufen 113, 114 derart, dass aus allen einzelnen Umschaltsignalen U1, U2 ein eine Information zum Umschalten vom aktiven Kurzschlussbetrieb in den Freilauf beinhaltendes, resultierendes Umschaltsignal U gebildet und an einem Ausgangsanschluss 119 der Verknüpfungsstufe 118 abgegeben wird, wenn zu jedem der Drehzahlsignale D1, D2 ein einzelnes Umschaltsignal U1, U2 zum Umschalten vom aktiven Kurzschlussbetrieb in den Freilauf erzeugt wird, d.h. wenn alle einzelnen Umschaltsignale U1, U2 übereinstimmend eine Information zum Umschalten vom aktiven Kurzschlussbetrieb in den Freilauf beinhalten. Die Verknüpfungsstufe 118 ist also bevorzugt als UND-Schaltung ausgebildet, so dass die einzelnen Umschaltsignale U1, U2 durch die Verknüpfungsstufe 118 gemäß einer logischen UND-Funktion miteinander werden.

Um sicherzustellen, dass das Umschalten tatsächlich nur aus dem aktiven Kurzschlussbetrieb heraus in den Freilauf erfolgt, ist die Verknüpfungsstufe 118 mit einem weiteren Eingangsanschluss ausgebildet, der mit dem Kurzschluss-Anforderungssignaleingang 218 der Treiberstufe 216 verbunden ist, so dass diesem weiteren Eingangsanschluss das Kurzschluss-Anforderungssignal zugeführt wird. Dadurch ist die Verknüpfungsstufe 118 zum Verknüpfen der einzelnen Umschaltsignale U1, U2 der Vergleichsstufen 113, 114 mit dem Kurzschluss-Anforderungssignal, das zum Überführen des Umrichters bei einer fehlerhaften Ansteuerung in den aktiven Kurzschlussbetrieb vorgesehen ist, derart eingerichtet, dass mit dem resultierenden Umschaltsignal U der Umrichter 207 nur dann zum Umschalten vom aktiven Kurzschlussbetrieb in den Freilauf angesteuert wird, wenn sich der Umrichter 207 im aktiven Kurzschlussbetrieb befindet. Die einzelnen Umschaltsignale U1, U2 werden durch die als UND-Schaltung ausgebildete Verknüpfungsstufe 118 miteinander und mit dem Kurzschluss-Anforderungssignal gemäß einer logischen UND-Funktion verknüpft.

Das resultierende Umschaltsignal U wird vom Ausgangsanschluss 119 der Verknüpfungsstufe 118 zum Ansteuern des Umrichters 207 mit dem resultierenden Umschaltsignal U einem Freilauf-Anforderungssignaleingang 120 der Treiberstufe 216 als Freilauf-Anforderungssignal zugeleitet. Die Treiberstufe 216 ist derart ausgebildet, dass auf Empfang des Freilauf-Anforderungssignals am Freilauf-Anforderungssignaleingang 120 alle Leistungsschalter 210, 211, 212, 213, 214 und 215 in den nichtleitenden Zustand überführt werden.

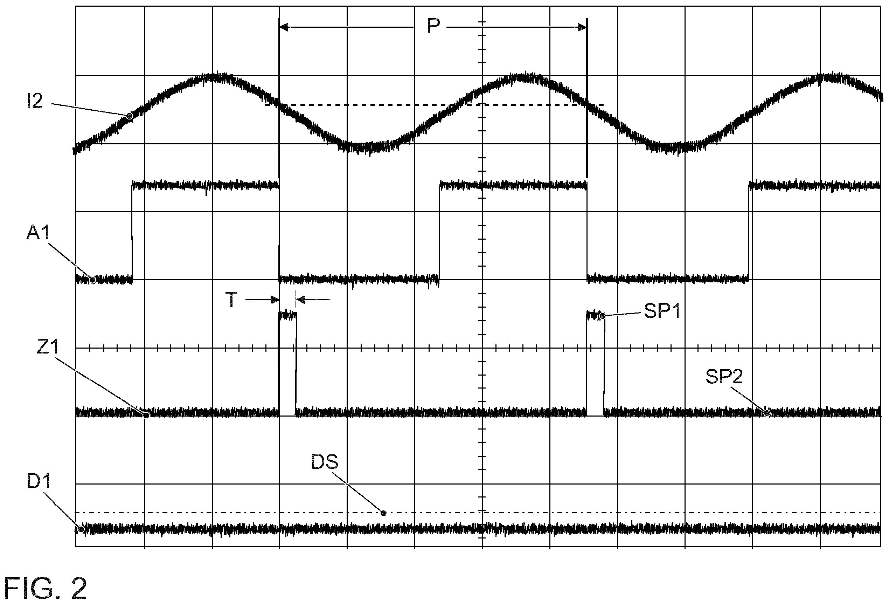

Figur 2 zeigt zeitliche Signalverläufe in einem ersten, beispielhaften Betriebsfall der Schutzvorrichtung 100 nach Figur 1 anhand des ersten Signalverarbeitungszweigs 101 mit dem zweiten Phasenstrom I2, der die Periodendauer P aufweist, dem daraus abgeleiteten ersten Auslösesignal A1 derselben Periodendauer P und dem ersten Zeitsignal Z1. Im dargestellten Betriebsfall ist das vorgegebene Zeitintervall T etwa zwanzigmal kürzer als die Periodendauer P. Dadurch wird ein erstes Drehzahlsignal D1 mit einem Signalpegel erzeugt, der geringer ist als die Drehzahlschwelle DS. Dadurch wird ein erstes Umschaltsignal U1 erzeugt, das ein Umschalten in den Freilauf bewirkt.

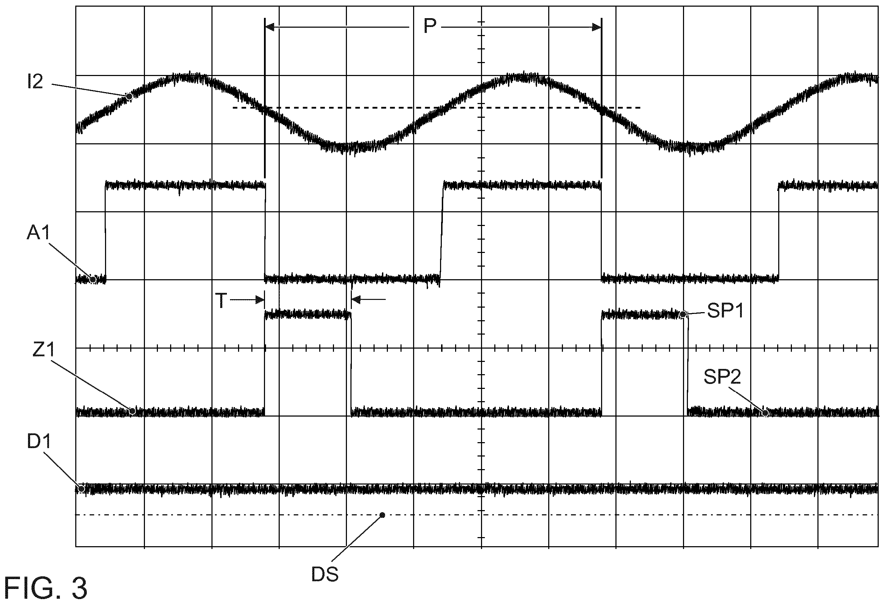

Figur 3 zeigt zeitliche Signalverläufe in einem zweiten, beispielhaften Betriebsfall der Schutzvorrichtung 100 nach Figur 1, wiederum anhand des ersten Signalverarbeitungszweigs 101. Jetzt ist das vorgegebene Zeitintervall T nur etwa viermal kürzer als die Periodendauer P. Dadurch wird ein erstes Drehzahlsignal D1 mit einem Signalpegel erzeugt, der höher ist als die Drehzahlschwelle DS, so dass kein Umschalten in den Freilauf erfolgt.

### Bezugszeichenliste

- 100: Schutzvorrichtung
- 101: Erster Signalverarbeitungszweig von 100
- 102: Zweiter Signalverarbeitungszweig von 100
- 103: Erste Strommessstufe von 101
- 104: Zweite Strommessstufe von 102
- 105: Erste Drehzahlsignal-Erzeugungsstufe von 101
- 106: Zweite Drehzahlsignal-Erzeugungsstufe von 102
- 107: Erste Periodendauer-Detektionsstufe von 105
- 108: Zweite Periodendauer-Detektionsstufe von 106
- 109: Erste Zeitstufe von 105
- 110: Zweite Zeitstufe von 106
- 111: Erste Mittelwert-Bildungsstufe von 105
- 112: Zweite Mittelwert-Bildungsstufe von 105
- 113: Erste Vergleichsstufe von 101
- 114: Zweite Vergleichsstufe von 102
- 115: Ausgangsanschluss von 113
- 116: Ausgangsanschluss von 114
- 117: Referenzsignalleitung für DS
- 118: Verknüpfungsstufe von 100
- 119: Ausgangsanschluss von 118
- 120: Freilauf-Anforderungssignaleingang von 216

- 200: Elektrische Maschine
- 201: Erster Phasenanschluss von 200
- 202: Zweiter Phasenanschluss von 200
- 203: Dritter Phasenanschluss von 200
- 204: Erster Ausgangsanschluss von 207
- 205: Zweiter Ausgangsanschluss von 207
- 206: Dritter Ausgangsanschluss von 207
- 207: Umrichter
- 208: Erster Versorgungsspannungsanschluss zu 207
- 209: Zweiter Versorgungsspannungsanschluss zu 207
- 210: Erster Leistungsschalter von 207
- 211: Zweiter Leistungsschalter von 207
- 212: Dritter Leistungsschalter von 207
- 213: Vierter Leistungsschalter von 207
- 214: Fünfter Leistungsschalter von 207
- 215: Sechster Leistungsschalter von 207
- 216: Treiberstufe
- 217: Ansteuersignaleingang von 216
- 218: Kurzschluss-Anforderungssignaleingang von 216

- A1: Erstes Auslösesignal
- A2: Zweites Auslösesignal
- D1: Erstes Drehzahlsignal
- D2: Zweites Drehzahlsignal
- DS: Drehzahlschwelle
- I2: Zweiter Phasenstrom in 202
- I3: Dritter Phasenstrom in 203
- P: Periodendauer der Phasenströme I2, I3
- SP1: Erster Signalpegel von Z1, Z2
- SP2: Zweiter Signalpegel von Z1, Z2
- T: Vorgegebenes Zeitintervall
- U: Resultierendes Umschaltsignal an 119
- U1: Erstes einzelnes Umschaltsignal an 115
- U2: Zweites einzelnes Umschaltsignal an 116
- Z1: Erstes Zeitsignal
- Z2: Zweites Zeitsignal

## Patentansprüche

1. Verfahren zum Begrenzen eines Drehmoments einer durch einen wenigstens einphasigen Umrichter (207) gespeisten elektrischen Maschine (200), die bei einer fehlerhaften Ansteuerung des Umrichters (207) in einen aktiven Kurzschlussbetrieb und bei Unterschreiten einer Drehzahlschwelle (DS) in einen Freilaufbetrieb überführt wird, **dadurch gekennzeichnet, dass**
• im aktiven Kurzschlussbetrieb wenigstens ein aktueller Istwert wenigstens eines Phasenstroms (I2, I3) der Maschine (200) detektiert,
• aus dem wenigstens einen detektierten aktuellen Istwert des wenigstens einen Phasenstroms (I2, I3) ein eine aktuelle Drehzahlinformation beinhaltendes Drehzahlsignal (D1, D2) abgeleitet,
• die aktuelle Drehzahlinformation des Drehzahlsignals (D1, D2) mit der vorgebbaren Drehzahlschwelle (DS) verglichen,
• sobald die aktuelle Drehzahlinformation eine Drehzahl anzeigt, die die vorgebbare Drehzahlschwelle (DS) unterschreitet, ein Umschaltsignal (U, U1, U2) zum Umschalten vom aktiven Kurzschlussbetrieb in den Freilauf erzeugt und
• mit diesem Umschaltsignal (U, U1, U2) der Umrichter (207) angesteuert
wird,
wobei zum Ableiten des die aktuelle Drehzahlinformation beinhaltenden Drehzahlsignals (D1, D2)
• aus dem wenigstens einen detektierten aktuellen Istwert des wenigstens einen Phasenstroms (I2, I3) eine Periodendauer (P), insbesondere zwischen zwei Nulldurchgängen, des wenigstens einen Phasenstroms (I2, I3) detektiert wird,
• mit Beginn jeder Periodendauer (P) des wenigstens einen Phasenstroms (I2, I3) wenigstens ein Zeitsignal (Z1, Z2) ausgelöst wird, das
∘ während eines vorgegebenen Zeitintervalls (T) innerhalb der Periodendauer (P) des wenigstens einen Phasenstroms (I2, I3) einen ersten (SP1) und
∘ während der übrigen Periodendauer (P) des wenigstens einen Phasenstroms (I2, I3) einen zweiten (SP2) Signalpegel aufweist,
• das wenigstens eine Zeitsignal (Z1, Z2) fortlaufend über je eine Periodendauer (P) gemittelt wird und ein daraus gebildeter Mittelwert des wenigstens einen Zeitsignals (Z1, Z2) das die aktuelle Drehzahlinformation beinhaltende Drehzahlsignal (D1, D2) bildet.

2. Verfahren nach Anspruch 1,
**dadurch gekennzeichnet, dass**
bei einer durch einen wenigstens zweiphasigen, bevorzugt dreiphasigen, Umrichter (207) gespeisten, wenigstens zweiphasigen, bevorzugt dreiphasigen, elektrischen Maschine (200)
• aktuelle Istwerte wenigstens zweier, bevorzugt genau zweier, Phasenströme (I2, I3) unabhängig voneinander detektiert werden,
• aus jedem der detektierten aktuellen Istwerte der Phasenströme (I2, I3) je ein eine aktuelle Drehzahlinformation beinhaltendes Drehzahlsignal (D1, D2) abgeleitet wird,
• die aktuelle Drehzahlinformation jedes Drehzahlsignals (D1, D2) für sich mit der vorgebbaren Drehzahlschwelle (DS) verglichen wird,
• sobald die aktuelle Drehzahlinformation je eines der Drehzahlsignale (D1, D2) eine Drehzahl anzeigt, die die vorgebbare Drehzahlschwelle (DS) unterschreitet, aus dem Vergleich dieses Drehzahlsignals (D1, D2) mit der Drehzahlschwelle (DS) je ein einzelnes Umschaltsignal (U1, U2) zum Umschalten vom aktiven Kurzschlussbetrieb in den Freilauf erzeugt wird,
• wenn zu jedem der Drehzahlsignale (D1, D2) ein einzelnes Umschaltsignal (U1, U2) zum Umschalten vom aktiven Kurzschlussbetrieb in den Freilauf erzeugt wird, d.h. wenn alle einzelnen Umschaltsignale (U1, U2) übereinstimmend eine Information zum Umschalten vom aktiven Kurzschlussbetrieb in den Freilauf beinhalten, aus allen einzelnen Umschaltsignalen (U1, U2) ein eine Information zum Umschalten vom aktiven Kurzschlussbetrieb in den Freilauf beinhaltendes, resultierendes Umschaltsignal (U) gebildet und
• mit dem resultierenden Umschaltsignal (U) der Umrichter (207) angesteuert wird.

3. Verfahren nach einem oder mehreren der vorhergehenden Ansprüche,
**dadurch gekennzeichnet, dass**
mit dem Umschaltsignal (U1, U2) oder dem resultierenden Umschaltsignal (U) der Umrichter (207) nur dann zum Umschalten vom aktiven Kurzschlussbetrieb in den Freilauf angesteuert wird, wenn sich der Umrichter (207) im aktiven Kurzschlussbetrieb befindet.

4. Schutzvorrichtung (100) zum Begrenzen eines Drehmoments einer elektrischen Maschine (200), die dazu vorgesehen ist, durch einen wenigstens einphasigen Umrichter (207) gespeist, bei einer fehlerhaften Ansteuerung des Umrichters (207) in einen aktiven Kurzschlussbetrieb und bei Unterschreiten einer Drehzahlschwelle (DS) in einen Freilaufbetrieb überführt zu werden,
**gekennzeichnet durch**
• wenigstens eine Strommessstufe (103, 104); die dazu ausgeführt ist, wenigstens einen aktuellen Istwert wenigstens eines Phasenstroms (I2, I3) der Maschine (200) im aktiven Kurzschlussbetrieb zu detektieren,
• wenigstens eine Drehzahlsignal-Erzeugungsstufe (105, 106), die dazu ausgeführt ist, ein eine aktuelle Drehzahlinformation beinhaltendes Drehzahlsignal (D1, D2) aus dem wenigstens einen detektierten aktuellen Istwert des wenigstens einen Phasenstroms (I2, I3) abzuleiten,
• wenigstens eine Vergleichsstufe (113, 114) , die dazu ausgeführt ist,
∘ die aktuelle Drehzahlinformation des Drehzahlsignals (D1, D2) mit der vorgebbaren Drehzahlschwelle (DS) zu vergleichen,
∘ ein Umschaltsignal (U1, U2) zum Umschalten vom aktiven Kurzschlussbetrieb in den Freilauf, sobald die aktuelle Drehzahlinformation eine Drehzahl anzeigt, die die vorgebbare Drehzahlschwelle (DS) unterschreitet, zu erzeugen, und
∘ den Umrichter (207) mit diesem Umschaltsignal anzusteuern,
wobei die wenigstens eine Drehzahlsignal-Erzeugungsstufe (105, 106) zum Ableiten des die aktuelle Drehzahlinformation beinhaltenden Drehzahlsignals (D1, D2) umfasst:
• wenigstens eine Periodendauer-Detektionsstufe (107, 108), die dazu ausgeführt ist,
∘ eine Periodendauer (P), insbesondere zwischen zwei Nulldurchgängen, des wenigstens einen detektierten aktuellen Istwerts des wenigstens einen Phasenstroms (I2, I3) zu detektieren, und
∘ ein diese Periodendauer (P) aufweisendes Auslösesignal (A1, A2) zu erzeugen,
• wenigstens eine Zeitstufe (109, 110), die dafür vorgesehen ist,
∘ das Auslösesignal (A1, A2) zugeführt zu erhalten und
∘ mit Beginn jeder Periodendauer (P) des wenigstens einen Phasenstroms (I2, I3) wenigstens ein Zeitsignal (Z1, Z2) auszulösen, das
▪ während eines vorgegebenen Zeitintervalls (T) innerhalb der Periodendauer (P) des wenigstens einen Phasenstroms (I2, I3) einen ersten (SP1) und
▪ während der übrigen Periodendauer (P) des wenigstens einen Phasenstroms (I2, I3) einen zweiten (SP2)
Signalpegel aufweist,
• und wenigstens eine Mittelwert-Bildungsstufe (111, 112), die dazu ausgeführt ist,
∘ wenigstens ein Zeitsignal (Z1, Z2) über je eine Periodendauer (P) fortlaufend zu mitteln, und
∘ einen Mittelwert des wenigstens einen Zeitsignals (Z1, Z2) daraus zu gewinnen, wobei der Mittelwert das die aktuelle Drehzahlinformation beinhaltende Drehzahlsignal (D1, D2) bildet.

5. Schutzvorrichtung (100) nach Anspruch 4,
**dadurch gekennzeichnet, dass**
bei einer durch einen wenigstens zweiphasigen, bevorzugt dreiphasigen, Umrichter (207) gespeisten, wenigstens zweiphasigen, bevorzugt dreiphasigen, elektrischen Maschine (200) vorgesehen sind:
• wenigstens zwei, bevorzugt genau zwei, Strommessstufen (103, 104) zum Detektieren aktueller Istwerte wenigstens zweier, bevorzugt genau zweier, Phasenströme (I2, I3) der Maschine (200) im aktiven Kurzschlussbetrieb unabhängig voneinander,
• wenigstens zwei, bevorzugt genau zwei, Drehzahlsignal-Erzeugungsstufen (105, 106) zum Ableiten je eines eine aktuelle Drehzahlinformation beinhaltenden Drehzahlsignals (D1, D2) aus jedem der detektierten aktuellen Istwerte der Phasenströme (I2, I3),
• wenigstens zwei, bevorzugt genau zwei, Vergleichsstufen (113, 114)
∘ zum Vergleichen der aktuellen Drehzahlinformation jedes Drehzahlsignals (D1, D2) für sich mit der vorgebbaren Drehzahlschwelle (DS),
∘ zum Erzeugen je eines einzelnen Umschaltsignals (U1, U2) zum Umschalten vom aktiven Kurzschlussbetrieb in den Freilauf, sobald die aktuelle Drehzahlinformation je eines der Drehzahlsignale (D1, D2) eine Drehzahl anzeigt, die die vorgebbare Drehzahlschwelle (DS) unterschreitet,
und
• eine Verknüpfungsstufe (118)
o zum Verknüpfen aller einzelnen Umschaltsignale (U1, U2) aller Vergleichsstufen (113, 114) derart, dass aus allen einzelnen Umschaltsignalen (U1, U2) ein eine Information zum Umschalten vom aktiven Kurzschlussbetrieb in den Freilauf beinhaltendes, resultierendes Umschaltsignal (U) gebildet wird, wenn zu jedem der Drehzahlsignale (D1, D2) ein einzelnes Umschaltsignal (U1, U2) zum Umschalten vom aktiven Kurzschlussbetrieb in den Freilauf erzeugt wird, d.h. wenn alle einzelnen Umschaltsignale (U1, U2) übereinstimmend eine Information zum Umschalten vom aktiven Kurzschlussbetrieb in den Freilauf beinhalten,
∘ wahlweise zum Verknüpfen aller einzelnen Umschaltsignale (U1, U2) aller Vergleichsstufen (113, 114) oder des resultierenden Umschaltsignals (U) mit einem Kurzschluss-Anforderungssignal (an 218), das zum Überführen des Umrichters (207) bei einer fehlerhaften Ansteuerung (an 217) in den aktiven Kurzschlussbetrieb vorgesehen ist, derart, dass mit dem resultierenden Umschaltsignal (U) der Umrichter (207) nur dann zum Umschalten vom aktiven Kurzschlussbetrieb in den Freilauf angesteuert wird, wenn sich der Umrichter (207) im aktiven Kurzschlussbetrieb befindet,
∘ und zum Ansteuern des Umrichters (207) mit diesem resultierenden Umschaltsignal (U).

6. Schutzvorrichtung (100) nach einem der Ansprüche 4 oder 5,
**dadurch gekennzeichnet, dass**
die wenigstens eine Strommessstufe (103, 104) durch wenigstens eine jener Strommessstufen (103, 104) gebildet ist, die für eine Steuerung eines bestimmungsgemäßen, fehlerfreien Betriebs der elektrischen Maschine (200) vorgesehen sind.

7. Elektrischer Antrieb,
**gekennzeichnet durch**
wenigstens eine elektrische Maschine (200) der im Anspruch 5 genannten Art und durch eine Schutzvorrichtung (100) nach einem oder mehreren der Ansprüche 4 bis 6.

8. Fahrzeug, insbesondere Straßenfahrzeug,
**gekennzeichnet durch**
einen elektrischen Antrieb nach Anspruch 7 und/oder durch eine Schutzvorrichtung (100) nach einem oder mehreren der Ansprüche 4 bis 6.

## Claims

1. Method for limiting a torque of an electric machine (200) fed by an at least single-phase converter (207), which machine is converted to active short-circuit operation when the converter (207) is driven incorrectly and into freewheeling operation when a rotational speed threshold (DS) is undershot,
**characterized in that**
• at least one current actual value of at least one phase current (12, 13) of the machine (200) is detected during active short-circuit operation,
• a rotational speed signal (D1, D2) carrying current rotational speed information is derived from the at least one detected current actual value of the at least one phase current (12, 13),
• the current rotational speed information of the rotational speed signal (D1, D2) is compared with the pre-specifiable rotational speed threshold (DS),
• as soon as the current rotational speed information indicates a rotational speed which lies below the pre-specifiable rotational speed threshold (DS), a switching signal (U, U1, U2) is generated for switching from active short-circuit operation to freewheeling, and
• the converter (207) is driven with this switching signal (U, U1, U2),
wherein, for deriving the rotational speed signal (D1, D2) carrying the current rotational speed information,
• a period duration (P), in particular between two zero crossings, of the at least one phase current (12, 13) is detected from the at least one detected current actual value of the at least one phase current (12, 13),
• at the beginning of each period duration (P) of the at least one phase current (12, 13), at least one time signal (Z1, Z2) is triggered, which
∘ during a prespecified time interval (T) within the period duration (P) of the at least one phase current (12, 13) has a first (SP1) and
∘ during the remaining period duration (P) of the at least one phase current (12, 13) has a second (SP2) signal level,
• the at least one time signal (Z1, Z2) is continuously averaged over each period duration (P) and an average value of the at least one time signal (Z1, Z2) formed therefrom forms the rotational speed signal (D1, D2) carrying the current rotational speed information.

2. Method according to Claim 1,
**characterized in that**
in the case of an at least two-phase, preferably three-phase, electric machine (200) fed by an at least two-phase, preferably three-phase, converter (207),
• current actual values of at least two, preferably exactly two, phase currents (12, 13) are detected independently of each other,
• a rotational speed signal (D1, D2) carrying current rotational speed information is derived from each of the detected current actual values of the phase currents (12, 13),
• the current rotational speed information of each speed signal (D1, D2) is compared per se with the pre-specifiable rotational speed threshold (DS),
• as soon as the current rotational speed information of one of the rotational speed signals (D1, D2) indicates a rotational speed which falls below the pre-specifiable rotational speed threshold (DS), a single switching signal (U1, U2) for switching from active short-circuit operation to freewheeling is generated from the comparison of this rotational speed signal (D1, D2) with the rotational speed threshold (DS),
• if a single switching signal (U1, U2) for switching from active short-circuit operation to freewheeling is generated for each of the rotational speed signals (D1, D2), i.e. if all individual switching signals (U1, U2) carry matching information for switching from active short-circuit operation to freewheeling, a resulting switching signal (U) carrying information for switching from active short-circuit operation to freewheeling will be formed from all individual switching signals (U1, U2), and
• the converter (207) is driven with the resulting switching signal (U).

3. Method according to either or both of the preceding claims,
**characterized in that**
with the switching signal (U1, U2) or the resulting switching signal (U), the converter (207) is driven to switch from active short-circuit operation to freewheeling only when the converter (207) is in active short-circuit operation.

4. Protective device (100) for limiting a torque of an electric machine (200) which is provided, fed by an at least single-phase converter (207), to be changed over to an active short-circuit operation when the converter (207) is driven incorrectly and to a freewheeling operation when a rotational speed threshold (DS) is exceeded,
**characterized by**
• a least one current measuring stage (103, 104) which is designed to detect at least one current actual value of at least one phase current (12, 13) of the machine (200) in active short-circuit operation,
• at least one rotational speed signal generation stage (105, 106) which is designed to derive a rotational speed signal (D1, D2) carrying current rotational speed information from the at least one detected current actual value of the at least one phase current (12, 13),
• at least one comparison stage (113, 114) which is designed to
∘ compare the current rotational speed information of the rotational speed signal (D1, D2) with the pre-specifiable rotational speed threshold (DS),
∘ generate a switching signal (U1, U2) for switching from active short-circuit operation to freewheeling as soon as the current rotational speed information indicates a rotational speed which falls below the pre-specifiable rotational speed threshold (DS), and
∘ activate the converter (207) with this switching signal,
wherein the at least one rotational speed signal generation stage (105, 106) for deriving the rotational speed signal (D1, D2) carrying the current speed information comprises:
• at least one period-duration detection stage (107, 108) which is designed to
∘ detect a period duration (P), in particular between two zero crossings, of the at least one detected current actual value of the at least one phase current (12, 13), and
∘ generate a trigger signal (A1, A2) having this period duration (P),
• at least one time stage (109, 110) which is provided to
∘ receive the trigger signal (A1, A2) which is fed to it, and
∘ trigger at the beginning of each period duration (P) of the at least one phase current (12, 13) at least one time signal (Z1, Z2) which
▪ during a prespecified time interval (T) within the period duration (P) of the at least one phase current (12, 13) has a first (SP1) and
▪ during the remaining period duration (P) of the at least one phase current (12, 13) has a second (SP2) signal level,
• and at least one averaging stage (111, 112) which is designed to
∘ continuously average at least one time signal (Z1, Z2) over a period duration (P), and
∘ obtain therefrom an average value of the at least one time signal (Z1, Z2),
wherein the average value forms the rotational speed signal (D1, D2) carrying the current rotational speed information.

5. Protective device (100) according to Claim 4,
**characterized in that**
in the case of an at least two-phase, preferably three-phase, electric machine (200) fed by an at least two-phase, preferably three-phase, converter (207), the following are provided:
• at least two, preferably exactly two, current measuring stages (103, 104) for detecting current actual values of at least two, preferably exactly two, phase currents (12, 13) of the machine (200) in active short-circuit operation independently of each other,
• at least two, preferably exactly two, rotational speed signal generation stages (105, 106) for deriving one rotational speed signal (D1, D2) carrying current rotational speed information from each of the detected current actual values of the phase currents (12, 13),
• at least two, preferably exactly two, comparison stages (113, 114)
∘ for comparing the current rotational speed information of each speed signal (D1, D2) per se with the pre-specifiable rotational speed threshold (DS),
∘ for generating in each case one switching signal (U1, U2) for switching from active short-circuit operation to freewheeling, as soon as the current rotational speed information of one of the rotational speed signals (D1, D2) indicates a rotational speed which falls below the pre-specifiable rotational speed threshold (DS),
and
• a linking stage (118)
∘ for linking all individual switching signals (U1, U2) of all comparison stages (113, 114) in such a way that a resulting switching signal (U) carrying information for switching from active short-circuit operation to freewheeling is generated from all individual switching signals (U1, U2) when a single switching signal (U1, U2) for switching from active short-circuit operation to freewheeling is generated for each of the rotational speed signals (D1, D2), i.e. when all individual switching signals (U1, U2) carry matching information for switching from active short-circuit operation to freewheeling,
∘ selectively for linking all individual switching signals (U1, U2) of all comparison stages (113, 114) or the resulting switching signal (U) to a short-circuit request signal (at 218) which is provided for changing the converter (207) over to active short-circuit operation in the event of it being driven incorrectly (at 217), such that the converter (207) is driven with the resulting switching signal (U) for switching from active short-circuit operation to freewheeling only when the converter (207) is in active short-circuit operation,
∘ and for driving the converter (207) with this resulting switching signal (U).

6. Protective device (100) according to either of Claims 4 or 5,
**characterized in that**
the at least one current measuring stage (103, 104) is formed by at least one of the current measuring stages (103, 104) which are provided for controlling an intended, error-free operation of the electric machine (200).

7. Electric drive,
**characterized by**
at least one electric machine (200) of the type mentioned in Claim 5 and by a protective device (100) according to one or more of Claims 4 to 6.

8. Vehicle, in particular a road vehicle,
**characterized by**
an electric drive according to Claim 7 and/or by a protective device (100) according to one or more of Claims 4 to 6.

## Revendications

1. Procédé permettant de limiter le couple d'une machine électrique (200) alimentée par un convertisseur au moins monophasé (207), qui, en cas d'une commande incorrecte du convertisseur (207), est amenée dans un fonctionnement actif en court-circuit et, en cas de dépassement par le bas d'un seuil de vitesse de rotation (DS), est amenée dans un fonctionnement en roue libre,
**caractérisé en ce que**
• dans le fonctionnement actif en court-circuit, une valeur réelle instantanée d'au moins un courant de phase (I2, I3) de la machine (200) est détectée,
• à partir de la ou des valeurs réelles instantanées détectées du ou des courants de phase (I2, I3), un signal de vitesse de rotation (D1, D2) contenant une information de vitesse de rotation instantanée est déduit,
• l'information de vitesse de rotation instantanée du signal de vitesse de rotation (D1, D2) est comparée au seuil de vitesse de rotation (DS) prédéfinissable,
• dès que l'information de vitesse de rotation instantanée montre une vitesse de rotation qui tombe en dessous du seuil de vitesse de rotation (DS) prédéfinissable, un signal de commutation (U, U1, U2) est généré pour passer du fonctionnement actif en court-circuit en roue libre et
• le convertisseur (207) est commandé avec ce signal de commutation (U, U1, U2),
dans lequel pour déduire le signal de rotation (D1, D2) contenant une information de vitesse de rotation instantanée
• à partir de la ou des valeurs réelles instantanées détectées du ou des courants de phase (I2, I3), une durée de période (P), en particulier entre deux passages par zéro, du ou des courants de phase (I2, I3) est détectée,
• au début de chaque durée de période (P) du ou des courants de phase (I2, I3), au moins un signal temporel (Z1, Z2) est déclenché, qui
∘ présente, pendant un premier intervalle de temps prédéfini (T) au sein de la durée de période (P) du ou des courants de phase (I2, I3), un premier niveau de signal (SP1) et
∘ présente, pendant le reste de la durée de période (P) du ou des courants de phase (I2, I3), un deuxième niveau de signal (SP2),
• une moyenne du ou des signaux temporels (Z1, Z2) est calculée en continu respectivement sur une durée de période (P) et une moyenne ainsi obtenue du ou des signaux temporels (Z1, Z2) forme le signal de vitesse de rotation (D1, D2) contenant l'information de vitesse de rotation instantanée.

2. Procédé selon la revendication 1,
**caractérisé en ce que**
pour une machine électrique (200) au moins biphasée, de préférence triphasée, alimentée par un convertisseur (207) au moins biphasé, de préférence triphasé,
• des valeurs réelles instantanées d'au moins deux, de préférence exactement deux, courants de phase (I2, I3), sont détectées indépendamment les unes des autres,
• à partir de chacune des valeurs réelles instantanées détectées des courants de phase (I2, I3), un signal de vitesse de rotation (D1, D2) contenant une information de vitesse de rotation instantanée est respectivement déduit,
• l'information de vitesse de rotation instantanée de chaque signal de vitesse de rotation (D1, D2) est comparée séparément au seuil de vitesse de rotation (DS) prédéfinissable,
• dès que l'information de vitesse de rotation instantanée d'un des signaux de vitesse de rotation (D1, D2) respectif montre une vitesse de rotation qui tombe en dessous du seuil de vitesse de rotation (DS) prédéfinissable, à partir de la comparaison de ce signal de vitesse de rotation (D1, D2) au seuil de vitesse de rotation (DS), respectivement un signal de commutation unique (U1, U2) est généré pour passer du fonctionnement actif en court-circuit en roue libre,
• lorsque, pour chacun des signaux de vitesse de rotation (D1, D2), un signal de commutation unique (U1, U2) est généré pour passer du fonctionnement actif en court-circuit en roue libre, c'est-à-dire lorsque tous les signaux de commutation uniques (U1, U2) contiennent de manière concordante une information pour le passage du fonctionnement actif en court-circuit en roue libre, à partir de tous les signaux de commutation uniques (U1, U2), un signal de commutation résultant (U), contenant une information pour le passage du fonctionnement actif en court-circuit en roue libre, est formé et
• le convertisseur (207) est commandé avec le signal de commutation résultant (U).

3. Procédé selon une ou plusieurs des revendications précédentes,
**caractérisé en ce que**
le convertisseur (207) est commandé avec le signal de commutation (U1, U2) ou le signal de commutation résultant (U) pour le passage du fonctionnement actif en court-circuit en roue libre uniquement lorsque le convertisseur (207) se trouve dans le fonctionnement actif en court-circuit.

4. Dispositif de protection (100) permettant de limiter le couple d'une machine électrique (200), conçue pour être alimentée par un convertisseur au moins monophasé (207), en cas d'une commande incorrecte du convertisseur (207), être amenée dans un fonctionnement actif en court-circuit et, en cas de dépassement par le bas d'un seuil de vitesse de rotation (DS), amenée dans un fonctionnement en roue libre,
**caractérisé par**
• au moins un étage de mesure de courant (103, 104), conçu pour détecter au moins une valeur réelle instantanée d'au moins un courant de phase (I2, I3) de la machine (200) dans le fonctionnement actif en court-circuit,
• au moins un étage de génération de signal de vitesse de rotation (105, 106), conçu pour déduire un signal de vitesse de rotation (D1, D2) contenant une information de vitesse de rotation instantanée à partir de la ou des valeurs réelles instantanées détectées du ou des courants de phase (I2, I3),
• au moins un étage de comparaison (113, 114), conçu pour
∘ comparer l'information de vitesse de rotation instantanée du signal de vitesse de rotation (D1, D2) au seuil de vitesse de rotation (DS) prédéfinissable,
∘ générer un signal de commutation (U1, U2) pour le passage du fonctionnement actif en court-circuit en roue libre, dès que l'information de vitesse de rotation instantanée montre une vitesse de rotation qui tombe en dessous du seuil de vitesse de rotation (DS) prédéfinissable et
∘ commander le convertisseur (207) avec ce signal de commutation,
dans lequel le ou les étages de génération de signal de vitesse de rotation (105, 106) pour déduire le signal de vitesse de rotation (D1, D2) contenant l'information de vitesse de rotation instantanée comprennent :
• au moins un étage de détection de durée de période (107, 108), conçu pour
∘ détecter une durée de période (P), en particulier entre deux passages par zéro, de la ou des valeurs réelles instantanées détectées du ou des courants de phase (I2, I3) et
∘ générer un signal de déclenchement (A1, A2) présentant cette durée de période (P),
• au moins un étage temporel (109, 110), conçu pour
∘ recevoir le signal de déclenchement (A1, A2) alimenté et
∘ au début de chaque durée de période (P) du ou des courants de phase (I2, I3), déclencher au moins un signal temporel (Z1, Z2), qui
▪ présente, pendant un premier intervalle de temps prédéfini (T) au sein de la durée de période (P) du ou des courants de phase (I2, I3), un premier niveau de signal (SP1) et
▪ présente, pendant le reste de la durée de période (P) du ou des courants de phase (I2, I3), un deuxième niveau de signal (SP2),
• et au moins un étage de formation de moyenne (111, 112), conçu pour
∘ calculer une moyenne d'au moins un signal temporel (Z1, Z2) en continu sur chaque durée de période (P) et
∘ obtenir à partir de celle-ci une moyenne du ou des signaux temporels (Z1, Z2),
dans lequel la moyenne forme le signal de vitesse de rotation (D1, D2) contenant l'information de vitesse de rotation instantanée.

5. Dispositif de protection (100) selon la revendication 4,
**caractérisé en ce que**
pour une machine électrique (200) au moins biphasée, de préférence triphasée, alimentée par un convertisseur (207) au moins biphasé, de préférence triphasé, sont prévus :
• au moins deux, de préférence exactement deux, étages de mesure de courant (103, 104) pour la détection de valeurs réelles instantanées d'au moins deux, de préférence exactement deux, courants de phase (I2, I3) de la machine (200) dans le fonctionnement actif en court-circuit indépendamment l'une de l'autre,
• au moins deux, de préférence exactement deux, étages de génération de signal de vitesse de rotation (105, 106) pour déduire respectivement un signal de vitesse de rotation (D1, D2) contenant une information de vitesse de rotation instantanée à partir de chacune des valeurs réelles instantanées détectées des courants de phase (I2, I3),
• au moins deux, de préférence exactement deux, étages de comparaison (113, 114)
∘ pour comparer l'information de vitesse de rotation instantanée de chaque signal de vitesse de rotation (D1, D2) séparément au seuil de vitesse de rotation (DS) prédéfinissable,
∘ pour générer un signal de commutation (U1, U2) respectif pour le passage du fonctionnement actif en court-circuit en roue libre, dès que l'information de vitesse de rotation instantanée d'un signal respectif des signaux de vitesse de rotation (D1, D2) montre une vitesse de rotation qui tombe en dessous du seuil de vitesse de rotation (DS) prédéfinissable,
et
• un étage de liaison (118)
∘ pour relier tous les signaux de commutation uniques (U1, U2) de tous les étages de comparaison (113, 114) de sorte que, à partir de tous les signaux de commutation uniques (U1, U2), un signal de commutation résultat (U) soit formé, contenant une information pour le passage du fonctionnement actif en court-circuit en roue libre, lorsque pour chacun des signaux de vitesse de rotation (D1, D2) un signal de commutation unique (U1, U2) pour le passage du fonctionnement actif en court-circuit en roue libre est produit, c'est-à-dire lorsque tous les signaux de commutations uniques (U1, U2) contiennent de manière concordante une information pour le passage du fonctionnement actif en court-circuit en roue libre,
∘ pour relier sélectivement tous les signaux de commutation uniques (U1, U2) de tous les étages de comparaison (113, 114) ou le signal de commutation résultant (U) avec un signal de demande de court-circuit (à 218), destiné à faire passer le convertisseur (207) en cas de demande incorrecte (à 217) dans le fonctionnement actif en court-circuit, de telle sorte que le convertisseur (207) ne puisse être commandé avec le signal de commutation résultant (U) pour le passage du fonctionnement actif en court-circuit en roue libre, que lorsque le convertisseur (207) se trouve dans le fonctionnement actif en court-circuit,
∘ et pour commander le convertisseur (207) avec ce signal de commutation résultant (U).

6. Dispositif de protection (100) selon l'une quelconque des revendications 4 ou 5,
**caractérisé en ce que**
le ou les étages de mesure de courant (103, 104) sont formés par au moins un étage de mesure de courant (103, 104) qui est conçu pour une commande d'un fonctionnement correct dans le cas d'un usage conforme de la machine électrique (200).

7. Entraînement électrique,
**caractérisé par**
au moins une machine électrique (200) du type mentionné dans la revendication 5 et par un dispositif de protection (100) selon une ou plusieurs des revendications 4 à 6.

8. Véhicule, en particulier véhicule routier,
**caractérisé par**
un entraînement électrique selon la revendication 7 et/ou par un dispositif de protection (100) selon une ou plusieurs des revendications 4 à 6.
